(19) **Europäisches Patentamt / European Patent Office / Office européen des brevets**

(11) **EP 1 865 488 A1**

(12) **EUROPEAN PATENT APPLICATION**
published in accordance with Art. 158(3) EPC

(43) Date of publication:
**12.12.2007 Bulletin 2007/50**

(51) Int Cl.:
*G09G 3/36* (2006.01)      *G02F 1/133* (2006.01)
*G09G 3/20* (2006.01)      *G09G 3/34* (2006.01)
*H04N 5/57* (2006.01)      *H04N 5/66* (2006.01)

(21) Application number: **06715142.3**

(22) Date of filing: **03.03.2006**

(86) International application number:
**PCT/JP2006/304059**

(87) International publication number:
**WO 2006/112170 (26.10.2006 Gazette 2006/43)**

(84) Designated Contracting States:
**DE ES FR GB NL**

(30) Priority: **30.03.2005 JP 2005098228**
**11.07.2005 JP 2005201015**
**30.01.2006 JP 2006020034**

(71) Applicant: **Sharp Kabushiki Kaisha**
**Osaka-shi, Osaka 545-8522 (JP)**

(72) Inventors:
• **FUJINE, Toshiyuki**
**329-1334 Tochigi (JP)**

• **KOHASHIKAWA, Seiji**
**513-0854 Mie (JP)**
• **SUGINO, Michiyuki**
**267-0066 Chiba (JP)**
• **NIIYAMA, Ryuichi**
**599-8121 Osaka (JP)**

(74) Representative: **Müller, Frithjof E.**
**Müller Hoffmann & Partner**
**Patentanwälte**
**Innere Wiener Strasse 17**
**81667 München (DE)**

(54) **LIQUID CRYSTAL DISPLAY DEVICE**

(57)      A display apparatus is provided which can achieve suitable screen display luminance depending on video content as well as can reduce power consumption sufficiently. A liquid crystal display apparatus includes a liquid crystal panel that displays video and a light source that illuminates the liquid crystal panel, and the emission luminance of the light source is controlled depending on the genre of the video displayed on the liquid crystal panel. The emission luminance of the light source is adjusted while maintaining approximately constant white chromaticity (white balance).

FIG.1

**Description**

FIELD OF THE INVENTION

The present invention relates to a technique that displays video suitably depending on content of the displayed video.

BACKGROUND OF THE INVENTION

Conventionally, it has been devised to optimize the video quality by performing various controls based on a video feature quantity of incoming video signals. For example, an average picture level (hereinafter, "APL") has been calculated for one frame of an input video signal to adjust screen luminance depending on the APL; screen luminance has been adjusted based on a maximum luminance level and minimum luminance level among luminance levels of pixels in one frame of an input video signal; and adjustment of screen luminance and gamma correction have been performed by analyzing histogram or other information of luminance levels of an input video signal.

For example, Patent document 1 describes a backlight unit used in a liquid crystal display apparatus, etc., and, for facilitating visualization and achieving low power consumption, the luminance of the backlight unit is controlled to be increased when video with relatively dark gray scale level is displayed and is controlled to be decreased when video with relatively bright color tone is displayed.

Patent document 2 describes a liquid crystal display apparatus that achieves high luminance and high contrast as well as low power consumption by increasing luminance of the light source when it is detected that a video signal applied to a liquid crystal panel includes a white peak signal equal to or higher than a predetermined value.

Patent document 3 describes a liquid crystal display apparatus that expands the dynamic range of video and reduces, power consumption by obtaining an area occupation rate for each luminance level in one field or one frame of an input video signal and controlling contrast of a video signal and luminance of backlight individually and separately to expand the dynamic range of video and to reduce power consumption.

However, the above conventional techniques only adjust screen luminance depending on a feature quantity of each frame of a video signal, cannot achieve suitable screen luminance, contrast feeling, and sharpness feeling depending on a category of content of video to be displayed (type and content of video, such as movie, sport, news, cartoon, variety show, etc.), and do not sufficiently reduce power consumption. Therefore, a display apparatus must be provided with a plurality of video display modes such as a dynamic mode, standard mode, cinema (movie) mode, low power consumption mode, etc. in advance and a user must select a suitable video display mode depending on a content category of the video to be displayed, viewing environment, etc. to adjust video signal processing and emission luminance of backlight.

Patent document 4 describes a television system that changes luminance of displayed video depending on a category of video content to enhance effects. Description will be made of the television system described in the patent document 4 with reference to Fig. 21.

The television system is constituted by a television receiver 211, a luminance control apparatus 212, and a remote controller 213, and the television receiver 211 and the luminance control apparatus 212 are connected to an antenna 214 that can receive digital broadcasting electric waves.

Programs broadcasted in the digital broadcast are categorized into segmentalized genres such as a foreign movie, domestic movie, sport, etc. and a genre code number is added to each genre.

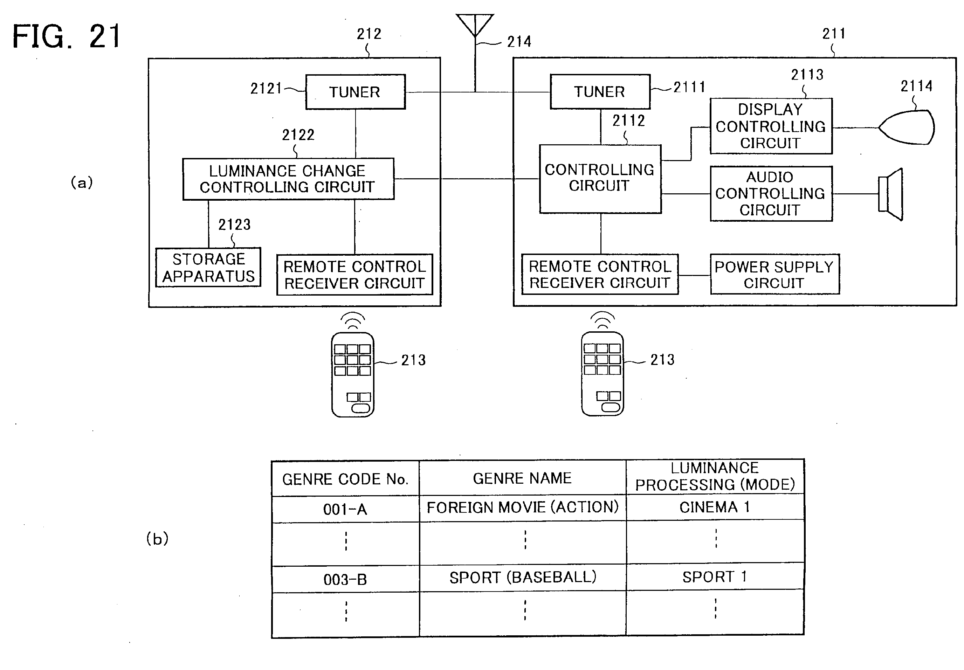

When one channel is selected by manipulating the remote controller, a luminance change control circuit 2122 refers to a genre-mode correlation table (Fig. 21 (b)) stored in a storage device 2123 based on a genre extracted by a tuner 2121 and outputs a control signal to the television receiver 211 to indicate that a luminance processing corresponding to that genre is applied. In response to this signal, a control circuit 2112 of the television receiver 211 outputs an instruction signal to a display control circuit 2113 to instruct adjustment, etc. of luminance of video displayed on a display 2114 in accordance with this control signal.

If the extracted genre is "foreign movie (action)", for example, a luminance processing is performed to reduce the luminance of the video displayed on the display 2114 in accordance with a cinema 1 mode processing to achieve sense of reality as if a viewer is in a movie theater, and if the extracted genre is "sport (baseball)", for example, a luminance processing is performed to increase the luminance of the video displayed on the display 2114 in accordance with a sport 1 mode processing to achieve sense of reality as if a viewer is in a ballpark. In this case, the most suitably processed video can be output for the action movie and the baseball broadcast.

In the patent document 4, a predetermined luminance processing is, for example, a processing for reducing luminance at a certain rate, a processing for changing luminance to increase sense of reality and to give powerful feeling, etc. That is, the display luminance of the video is changed by multiplying the input video signal level by a predetermined coefficient to increase or decrease the display luminance or by giving a predetermined curve to the input video signal.

Patent document 5 describes a digital television broadcast receiver similar to the television system described in the patent document 4. Description will be made of the digital television broadcast receiver described in the patent document 5 with reference to Fig. 22.

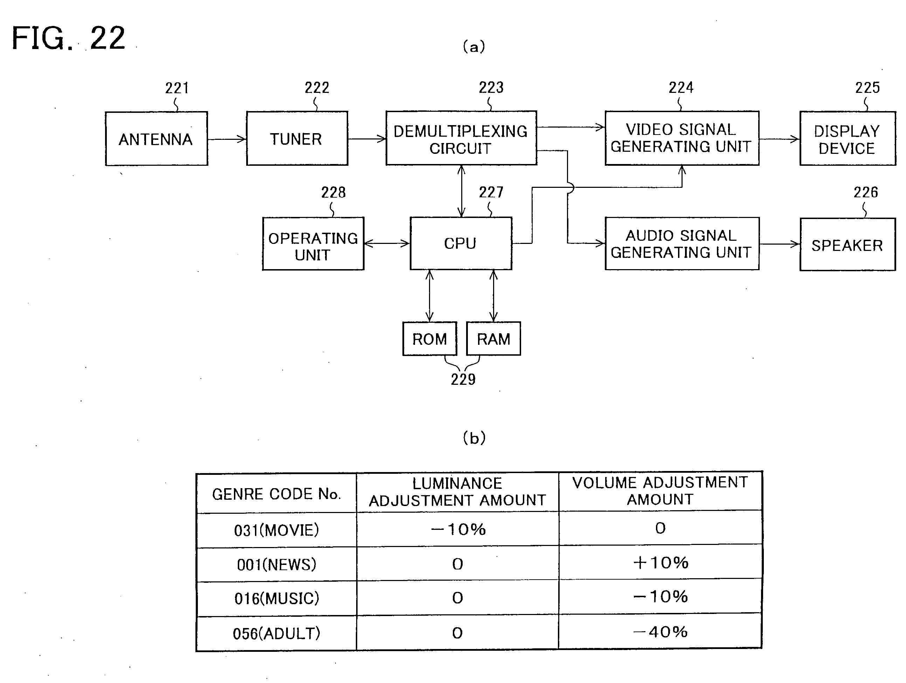

The digital television broadcast receiver described in the patent document 5 includes an antenna 221, a tuner 222, a demultiplexing circuit 223, a video signal generating unit 224, a display device 225, a speaker 226, a CPU 227, an operating unit 228, and a storage device 229 (RAM and ROM). The RAM stores a table necessary for generating program guide information and program guide data as well as a genre-based adjustment table shown in Fig. 22(b). The genre-based adjustment table includes genre codes representing adjusted genres and luminance adjustment amounts and sound volume adjustment amounts for those genres and the content of the genre-based adjustment table is set based on setting operation of a user.

In the example of Fig. 22 (b), for the genre of movies, which are watched for relatively long periods of time, the luminance adjustment amount is set with data representing that the luminance is reduced by 10 % (data representing -10 %) to alleviate fatigue of the eye. For the genre of news, the sound volume adjustment amount is set with data representing that the volume is increased by 10% (data representing +10 %). For the genre of music, the sound volume adjustment amount is set with data representing that the volume is decreased by 10% (data representing -10 %). For the genre of adult, the sound volume adjustment amount is set with data representing that the volume is decreased by 40% (data representing -40 %).

In this way, output video characteristics (e.g., luminance) and output audio characteristics can be set depending on user's preferences for each genre; when the viewed channel is changed, a program code broadcasted on the changed channel is obtained; and if output video characteristics and output audio characteristics are set to the obtained code, adjustment is automatically performed depending on the set output video characteristics and set output audio characteristics when the changed program is output.

As described above, in the patent document 5, display luminance of video is changed by a processing such as uniformly increasing or decreasing the luminance of the input video signal by 10 %. As with the patent documents 4 and 5, patent documents 6 and 7 disclose techniques that process video signals depending on the genre to obtain the preferred video qualities.

For reference, Patent document 8 describes a display apparatus that controls luminance of a light source of a backlight having dominant wavelength of 445 nm to 480 nm to increase in the case that the content category of the displayed video is a content that should have an awakening effect (e.g. movie).

Patent document 1: Japanese Laid-Open Patent Publication No. H6-34946
Patent document 2: Japanese Laid-Open Patent Publication No. S62-19835
Patent document 3: Japanese Laid-Open Patent Publication No. 2002-14660
Patent document 4: Japanese Laid-Open Patent Publication No. 2001-111916
Patent document 5: Japanese Laid-Open Patent Publication No. H10-322622
Patent document 6: Japanese Laid-Open Patent Publication No. 2002-158941
Patent document 7: Japanese Laid-Open Patent Publication No. 2005-12285
Patent document 8: International Publication No. WO2004/088616

DISCLOSURE OF THE INVENTION

PROBLEM TO BE SOLVED BY THE INVENTION

It is very beneficial to display video with suitable screen luminance set for each content category of displayed video as described in the patent documents 4 and 5.

However, delicate gray scale level representation is affected by applying a predetermined processing to an input video signal (luminance signal) as in the case of the patent documents 4 and 5.

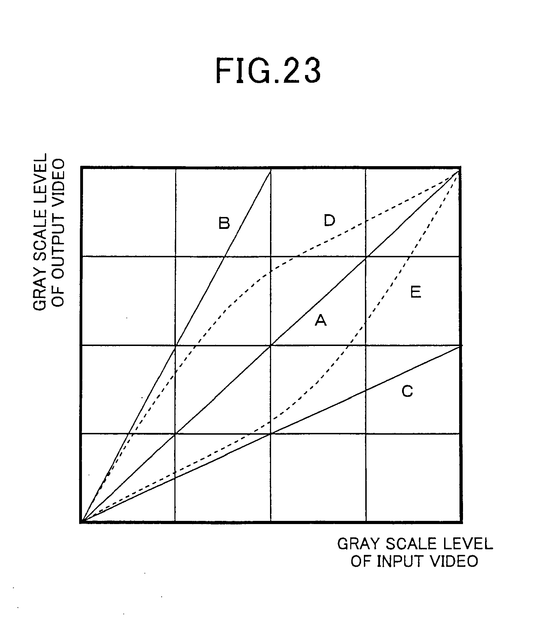

With reference to Fig. 23, in a simple example, if the gray scale level of the input video signal is directly output, a gray scale level transformation characteristic becomes a straight line like A. That is, the number of representable gray scale levels in the input video signal is identical to the number of representable gray scale levels in the output video signal.

However, when the luminance processing described in the patent documents 4 and 5 is attempted, if the luminance of the input video signal is converted to 50 %, the gray scale level transformation characteristic becomes a straight line like C. That is, if the number of representable gray scale levels in the input video signal is 256 gray scale levels (8 bits), the number of representable gray scale levels in the output video signal is reduced to half, which is 128 gray scale levels (corresponding to 7 bits), and the quality of the displayed video is reduced, resulting in pseudo-outline, for example.

While this makes the display luminance adjusted suitably depending on the content categories, since the number of the displayed gray scale levels is reduced and the delicate shading expression represented in the input video signal is lost when the video is displayed, the purpose of displaying video optimally is not achieved sufficiently.

A large part of power consumption of a large-screen liquid crystal display apparatus is made up of the power consumption of the backlight unit and the unwanted power consumption in the backlight unit is desired to be reduced also for alleviating the environmental burden. However, if the display luminance of the liquid crystal display apparatus is adjusted by applying a predetermined processing to the input video signal (luminance signal) as described in the patent documents 4 and 5, the reducing effect in the power consumption cannot be expected.

The present invention is intended to provide a liquid crystal apparatus that can perform optimum video expression depending on the content categories of the displayed video without reducing the display quality and that can achieve sufficient reduction of power consumption.

MEANS FOR SOLVING THE PROBLEMS

To solve above problems, the present invention provides a liquid crystal display apparatus including a liquid crystal panel that displays video and a light source that illuminates the liquid crystal panel and adopts a configuration for changing the emission luminance characteristic of the light source for a feature quantity of an input video signal depending on a genre of video displayed on the liquid crystal panel.

By automatically displaying video at display luminance suitable for each content/genre without reducing a display quality of video, the suitably displayed video can always be provided and unwanted power consumption can be sufficiently constrained. An emission luminance characteristic of a light source is a luminance characteristic that is obtained by controlling the emission luminance of the light source, and changing the emission luminance characteristic of the light source is synonymous with changing a light source luminance control characteristic.

Specifically, with the changes in the emission luminance characteristic of the light source for the feature quantity of the input video signal, the luminance control characteristic suitable for each genre can be achieved by changing a characteristic changing point that is a point where a slope indicating the emission luminance characteristic of the light source for the video feature quantity is changed, by changing an approximate characteristic changing point that is a characteristic changing point when the emission luminance characteristic corresponding to the video feature quantity is approximated by a plurality of lines, or by changing a difference between the maximum value and minimum value of the emission luminance of the light source.

The emission luminance characteristic of the light source for the feature quantity of the input video signal may be changed after the input video signal is extended or compressed.

The emission luminance characteristic of the light source for the feature quantity of the input video signal may be changed after a gray scale level transformation characteristic of the input video signal is changed.

The emission luminance of the light source may be changed based on a lookup table selected depending on a genre of video displayed on the liquid crystal panel.

The emission luminance of the light source may be changed based on a computing equation selected depending on a genre of video displayed on the liquid crystal panel.

The computing equation may be a function for obtaining the emission luminance of the light source corresponding to the feature quantity of the input video signal.

The feature quantity of the input video signal may be an average picture level of the input video signal.

Preferred video display can be performed depending on genres and unwanted power consumption can be constrained with a configuration that includes a liquid crystal panel displaying video and a light source illuminating the liquid crystal panel with white light to adjust increase and decrease of the emission luminance of the light source while maintaining approximately constant white chromaticity depending on the genre of the video displayed on the liquid crystal panel.

The genre of the video displayed on the liquid crystal panel may be determined by a genre code multiplexed in the input video signal or may be determined based on the past viewing history information.

EFFECT OF THE INVENTION

According to the present invention, video can be displayed suitably for each content category of the video and power consumption can be effectively reduced.

BRIEF DESCRIPTION OF THE DRAWINGS

[Fig. 1] Fig. 1 is a block diagram of a configuration of a display apparatus of a first embodiment;
[Fig. 2] Fig. 2 is an appearance diagram of an example of a backlight apparatus used in the display apparatus of the present invention;

[Fig. 3] Fig. 3 is an appearance diagram of another example of a backlight apparatus used in the display apparatus of the present invention;

[Fig. 4] Fig. 4 is a diagram of genre codes defined in the digital broadcasting standard;

[Fig. 5] Fig. 5 is a diagram of APL frequency distribution of a video signal received in the terrestrial digital broadcasting for each genre;

[Fig. 6] Fig. 6 is a diagram of a luminance control table that are preferably used when the genre is a major category "news/report";

[Fig. 7] Fig. 7 is a diagram of APL frequency distribution and a luminance control table that are preferably used when the genre is the major category "news/report";

[Fig. 8] Fig. 8 is a diagram of APL frequency distribution and a luminance control table that are preferably used when the genre is a major category "movie";

[Fig. 9] Fig. 9 is a diagram of APL frequency distribution and a luminance control table that are preferably used when the genre is a major category "cartoon/special effects", and Figs. 9B and 9D are diagrams of the APL frequency distribution and the luminance control table when the genre is the major category "news/report", which are comparison objects;

[Fig. 10] Fig. 10 is a diagram of APL frequency distribution and a luminance control table that are preferably used when the genre is "soccer", and Figs. 10B and 10D are diagrams of the APL frequency distribution and the luminance control table when the genre is the major category "news/report", which are comparison objects;

[Fig. 11] Fig. 11 is a diagram of the APL frequency distribution and the luminance control table that are preferably used when the genre is a medium category "soccer", which are comparison objects, and Figs. 11B and 11D are diagrams of APL frequency distribution and a luminance control table when the genre is a medium category "sumo/fighting sport";

[Fig. 12] Fig. 12 is a diagram of luminance control characteristic reducing the emission luminance of the light source in portions with extremely high and low APL;

[Fig. 13] Fig. 13 is a diagram of an example of luminance control characteristic of the light source for the video feature quantity when the characteristic does not have a portion with the constant luminance;

[Fig. 14] Fig. 14 is a diagram of operation for changing the luminance control characteristic tables gradually to prevent abrupt changes in the light source luminance;

[Fig. 15] Fig. 15 is a diagram of operation for changing luminance between different luminance control characteristic tables gradually to prevent abrupt changes in the light source luminance;

[Fig. 16] Fig. 16 is a diagram of operation for changing luminance between different luminance control characteristic tables gradually in a predetermined number of times to prevent abrupt changes in the light source luminance;

[Fig. 17] Fig. 17 is a diagram of an example of non-calculation regions when APL is obtained;

[Fig. 18] Fig. 18 is a diagram of an example of a nonlinear luminance control table when the genre is the major category "news/report";

[Fig. 19] Fig. 19 is a diagram of a luminance control table in the case of simple light source luminance control;

[Fig. 20] Fig. 20 is a diagram of an example of a luminance control table used when video signals are extended or compressed along with the control of the emission luminance of the light source to display video;

[Fig. 21] Fig. 21 is a diagram for describing a technique described in a patent document 4;

[Fig. 22] Fig. 22 is a diagram for describing a technique described in a patent document 5; and

[Fig. 23] Fig. 23 is a diagram for describing gray scale level characteristics.

EXPLANATIONS OF REFERENCE NUMERALS

11... genre information input unit, 12... decoder, 13... genre information detecting unit, 14... controlling unit, 15, ... video adjusting unit, 16... video displaying unit, 17... LCD controller, 18... light source controlling unit.

PREFERRED EMBODIMENTS OF THE INVENTION

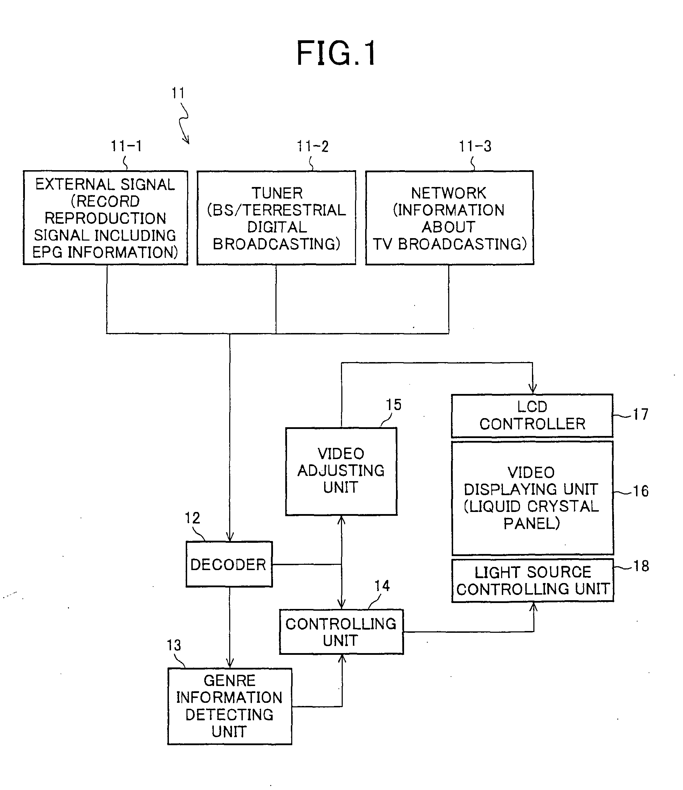

Description will be made of a display apparatus according to the embodiment with reference to Fig. 1. The display apparatus according to the embodiment includes: a genre information detecting unit 13 that detects genre information from electronic program information, etc. demultiplexed from input broadcast signals, etc. in a decoder 12; a video adjusting unit 15 that performs a predetermined video processing for video signals demultiplexed in the decoder 12; an LCD controller 17 that outputs liquid crystal drive signals to a gate driver and a source driver (not shown) of a liquid crystal panel (video displaying unit) 16 based on the video signals output from the video adjusting unit 15; and a light source controlling unit 18 that controls increase and decrease of emission luminance of a light source (not shown) illuminating the liquid crystal panel 16 from back side. The controlling unit 14 supplies a control signal to the light source controlling unit 18 to adjust the emission luminance of the light source to be suitable for the genre of the displayed video based on a feature quantity of the video signal decoded in the decoder 12 and the genre information detected by the genre information detecting unit 13.

Although the detection of the feature quantity of the input video signal is performed in a stage before the video adjustment by the video adjusting unit 15 in a block diagram shown in Fig. 1, this detection can be performed in a stage after the video adjustment. However, the video adjusting unit 15 may perform, for example, a processing for OSD display, a scaling processing, and a processing for letter box display (restriction of screen area using a black mask, etc.). If the feature quantity of the video signal is detected in the stage before the video adjustment by the video adjusting unit 15, the light source luminance can be adjusted depending on the true video signal without affected by these processing and, therefore, the detection is preferably performed in a stage before various video adjustments.

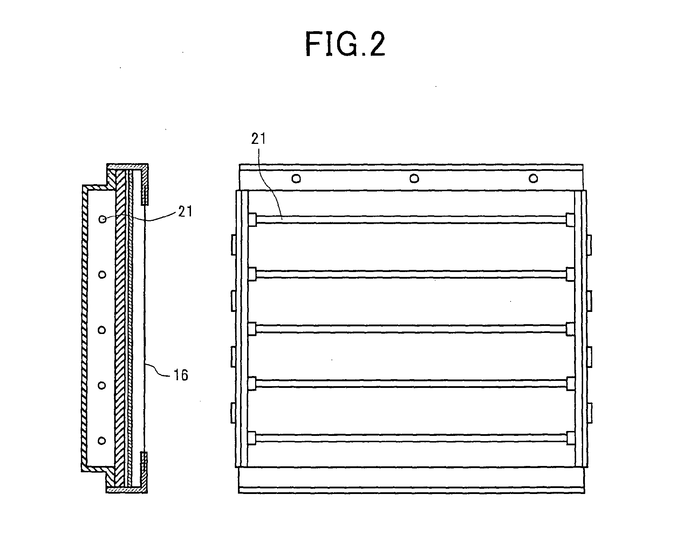

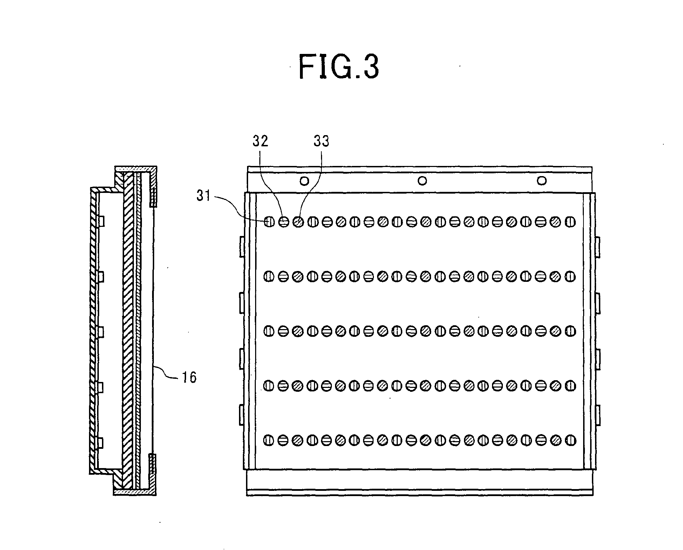

As shown in Fig. 2, the light source illuminating the liquid crystal panel 16 is narrow-tube-shape white fluorescent tubes 21 disposed at even intervals entirely within a backlight apparatus attached to the back side of the liquid crystal panel 16. Alternatively, as shown in Fig. 3, LED light sources including a plurality of colors composed of red, green, and blue (in Fig. 3, red light source 31, green light source 32, and blue light source 33) are disposed entirely within a backlight apparatus. Although not shown, the liquid crystal panel 16 may be illuminated with a so-called side edge type backlight apparatus that equalize the light from the light source on a surface with the use of an optical waveguide.

In the display apparatus including the fluorescent tubes 21 or the LEDs 31 to 33 as the light source of the backlight in this way, the suitable display luminance is achieved by controlling the emission luminance of the fluorescent tubes based on the genre information or by controlling the emission luminance of each LED without affecting color mixture of three primary colors significantly. That is, approximately-white light quantity of the light source for illuminating light modulation elements such as the liquid crystal is controlled to be increased or decreased (the emission luminance is increased or decreased while approximately constant chromaticity is maintained).

The genre information is, for example, a genre code included in a portion of the electronic program information (hereinafter, "EPG information") multiplexed and transmitted with a broadcast signal of terrestrial digital broadcasting or BS/CS digital broadcasting.

The broadcast signal is received by a tuner 11-2 and the decoder 12 performs a decoding process. From this broadcast signal, the genre code is extracted as the genre information by the genre information detecting unit 13. The genre information is not limited to the information that is separated and obtained from the broadcast signal tuned by the tuner 11-2, and for example, if an external device (such as a DVD player and a blue ray disk player) is connected to the display apparatus to display video information that is reproduced by the external device and input into the display apparatus, the genre information detecting unit 13 can detect a flag representing content (e.g., an identification code indicating "movie") added to a medium such as a DVD.

The broadcast signal is not limited to the digital broadcasting and the content information can be obtained from analog broadcasting. For example, ADAMS-EPG is the EPG information multiplexed with the analog broadcasting.

The genre information may be input concurrently with the input video signal as above, or may be input as sub-information separately from the video signal. In this case, even if the video signal and the genre information are separately input, the genre information is correlated with the video information and input. For example, XMLTV is an application that automatically obtains a TV program table published on Web and outputs in XML, and this can be used for obtaining the genre information of video displayed from network.

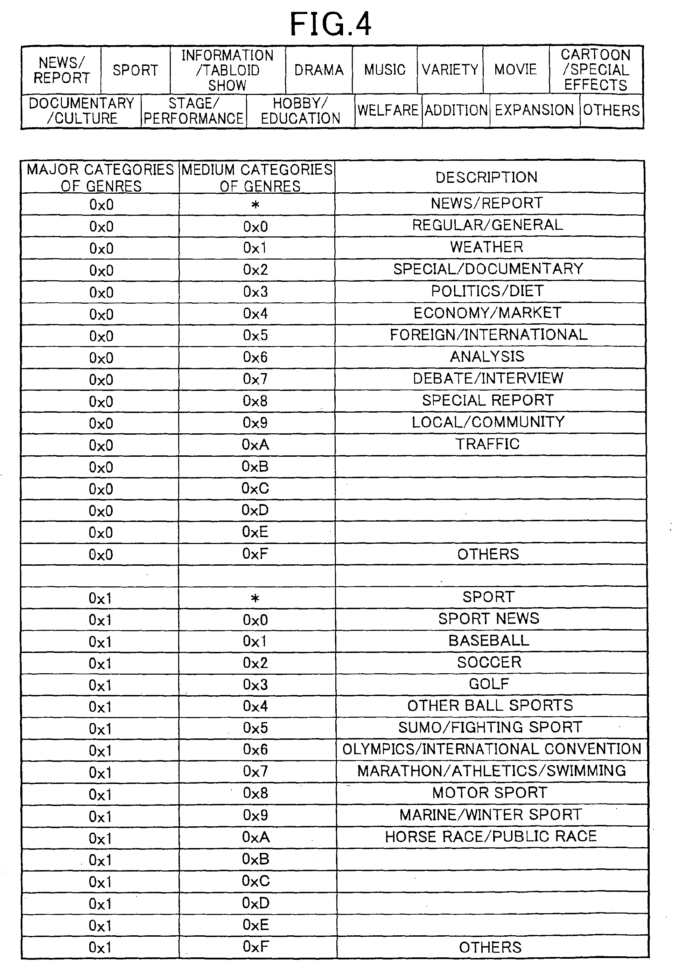

As shown in Fig. 4, for the genre codes as the genre information in the terrestrial digital broadcasting standard, preliminarily prescribed major categories are genres of "news/report", "sport", "information/tabloid show", "drama", "music", "variety", "movie", "cartoon/special effects", "documentary/culture", "stage/performance", "hobby/education", and "others", and a plurality of medium categories are prescribed for each major category. For example, in the major category "sport", prescribed medium categories are "sport news", "baseball", "soccer", "golf", "other ball sports", "sumo/fighting sport", "Olympics/international convention", "marathon/athletics/swimming", "motor sport", "marine/winter sport", "horse race/public race", and "others".

The display apparatus according to the embodiment determines a genre corresponding to the video to be displayed and controls the emission luminance of the light source to achieve the screen luminance, contrast, and sharpness feeling suitable for the determined genre.

The control of the emission luminance of the light source is performed by storing a plurality of luminance control tables (lookup tables) for each genre into a storage device such as ROM, by switching and selecting the luminance control table based on the genre information detected by the genre information detecting unit 13, and by controlling the drive of the light source in accordance with the luminance control characteristic in the luminance control table. The luminance control table shows relationships about how the emission luminance of the light source is set depending on the video feature quantity of the input video signal.

To optimally display the video displayed on the video displaying unit 16, the emission luminance of the light source is controlled in accordance with the luminance control table corresponding to the genre. Description will hereinafter be made of the case that the genre information is the genre codes multiplexed with broadcast signal of the terrestrial digital broadcasting and that the video feature quantity is APL.

First, to verify how the emission luminance of the light source is "suitably" controlled for "video to be displayed", the frequency distribution of the APL of the video signal received in the terrestrial digital broadcasting was examined for each genre at the same channel for a given period (about one week).

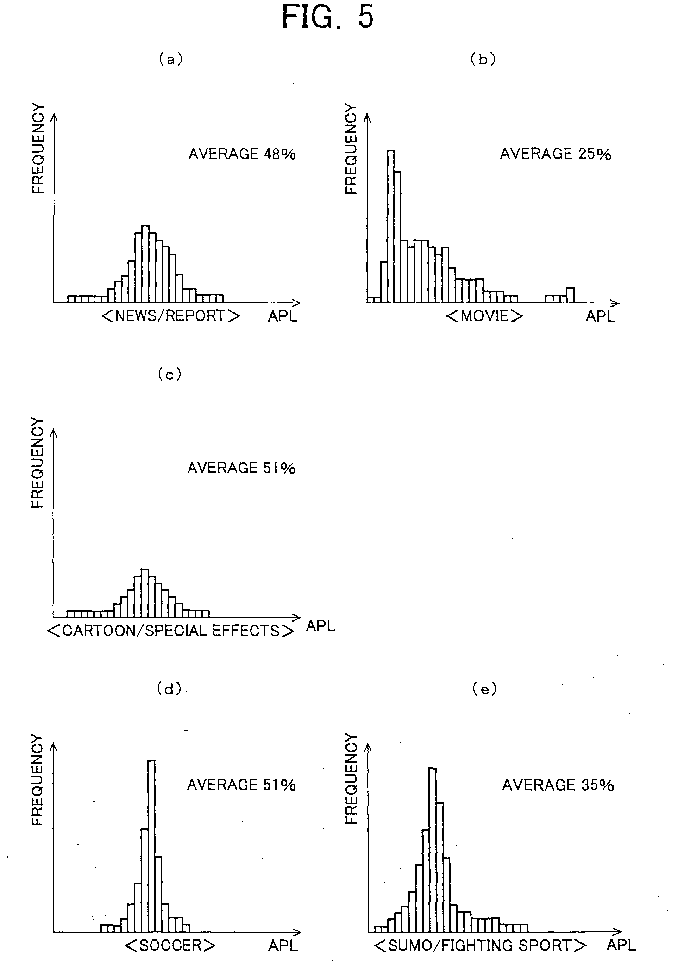

In Fig. 5, the results of the above examination are extracted for several genres. Fig. 5 (a) is a histogram of the frequency (time) of the APL of the video signal with a major-category genre code "news/report" when the broadcast signal is received at the same channel for a given period. A horizontal axis is the APL of the input video signal that is the video feature quantity; a vertical axis represents the frequency of the appearance of the APL of the input video signal in time (minute); and a gross average of the luminance levels of the input video signal of the genre is also shown.

Similarly, Figs. 5(b) and 5(c) are histograms of the frequencies of the APL of the input video signals when the genre codes of the displayed video signals are the major categories "movie" and "cartoon/special effects", respectively.

Figs. 5(d) and 5 (e) are histograms of the frequencies of the APL of the input video signals when the genre codes of the displayed video signals are medium categories "soccer" and "sumo/fighting sport", respectively, which are further categorized in the major category "sport".

To determine how the luminance of the light source is "suitably" controlled for "video to be displayed", the frequency distribution of the APL of the input video signal in the above can be used as one reference. In one example of suitable control of the emission luminance of the light source based on this distribution, if the APL of the video signal is generally concentrated on a higher place, it can be said that a lot of bright video are included in that genre, and therefore, the control for reducing the luminance of the light source can be considered when displaying the input video signal with high APL. With such control, the glare of the screen and stimulation to eyes can be reduced and power consumption can be reduced, and in that regard, this can be "suitable" control of the emission luminance of the light source.

The above control example will be described with an example of the APL distribution in the video signal of the genre of the major category "news/report" (Fig. 5(a)).

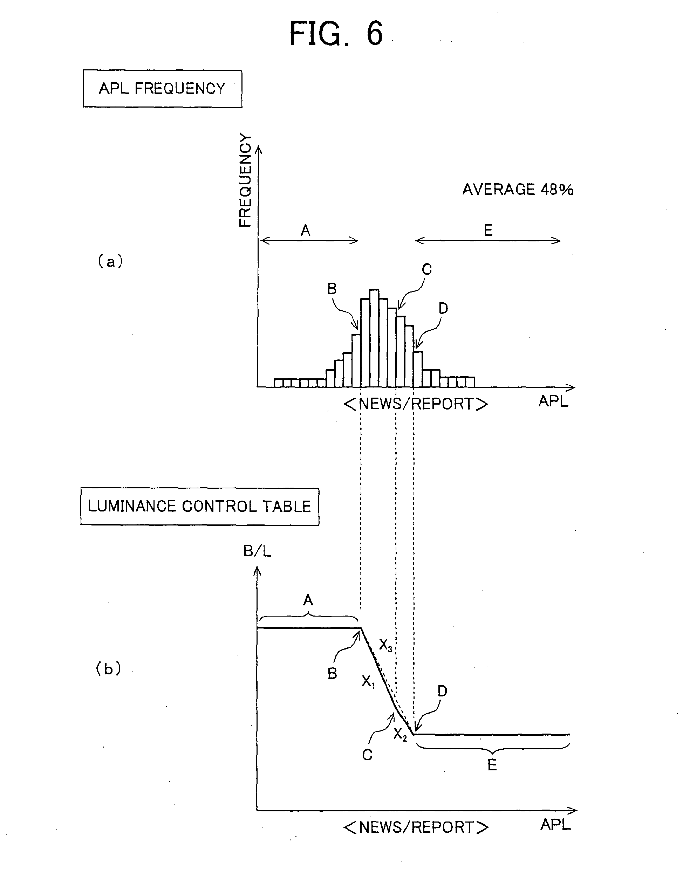

When the APL of the input video signal is low (A of Figs. 6(a) and 6 (b)), the emission luminance of the light source is set to be constant at the maximum value. Since the low APL portion is a darker video portion, if the light source luminance is set high, the effect of the glare of the screen and the stimulation to eyes is small while the gray scale level representation of the dark video portion is enhanced, and a peak potion of the dark screen can be highlighted to obtain beautiful video with contrast feeling. Even if the emission luminance of the light source is increased, the increase in the power consumption can be constrained since the appearance frequency of the video signal with low APL is low.

In the area of the APL with especially high appearance frequency (B-D in the horizontal axis direction of Fig. 6 (a)), the emission luminance of the light source is decreased as the APL of the detected video signal increases to reduce the glare of the screen and the stimulation to eyes, and to control the video to be displayed with suitable luminance (B-D in the horizontal axis direction of Fig. 6(b)).

The higher the appearance frequency of the APL of the video signal is, the more drastically the luminance of the light source is set to change. That is, since a B-C section in the horizontal axis direction of Fig. 6 (b) has a higher appearance frequency of the video signal than a C-D section, a slope of the luminance control characteristic for the APL is set to be steeper for the B-C section (B-C slope $x_1$ > C-D slope $x_2$). In this way, by setting the degree of increase or decrease of the light source luminance greater at a video having a high appearance frequency of the APL, the power consumption of the light source of the backlight light source can be reduced effectively.

When the APL of the input video signal is high (E of Figs. 6 (a) and 6(b)), the emission luminance of the light source is set to a low constant value to reduce the glare of the screen and the stimulation to eyes as much as possible.

As described above, based on the histogram of the appearance frequency of the video feature quantity, the control characteristic is defined such that the emission luminance of the light source is more drastically changed (the slope of the emission luminance control characteristic of the light source for the video feature quantity is made steeper) in the portion of the video feature quantity having a higher appearance frequency.

For convenience of the description, a characteristic changing point is hereinafter defined as a point where the slope indicating the emission luminance control characteristic of the light source for the video feature quantity is changed. In Fig. 6(b), intersection points B, C, D of four lines are the characteristic changing points (the portions indicated by A, E have a zero slope).

To simplify the emission luminance control of the light source, the characteristic may be defined by a line linking between the characteristic changing point B that is a point where the characteristic of the portion with the low APL of the input video signal (A of Figs. 6(a) and 6(b)) having the high constant value of the emission luminance of the light source (zero slope) is changed to the characteristic having a slope and the characteristic changing point D that is a point where the characteristic having a slope is changed to the characteristic of the portion with the high APL of the input video signal (E of Figs. 6 (a) and 6 (b)) having the low constant value of the emission luminance of the light source (zero slope) (slope $x_3$ of Fig. 6(b)).

Although the above example is general luminance control for each genre, it is difficult in practice to determine the "suitable" light source luminance control characteristic uniformly as described above since various specific situations about the video display exist depending on genres. Therefore, the specific situation for each genre must be comprehended to determine the suitable light source luminance control characteristic, and the suitable control of the light source will hereinafter be considered in the examples of several genres.

<News/Report>

The news and report are characterized by a lot of scene changes since many incidents are reported in sequence. The news and report are content watched on a daily basis as a part of daily life.

Therefore, as compared to the luminance control table shown in the general control shown in Fig. 6 (b), it is desirable to change the emission luminance of the light source more gently depending on the APL for smooth video display that fits into daily life. That is, if the genre of the displayed video is the major category "news/report", the emission luminance of the light source is preferably controlled by using the luminance control characteristic having greater APL range where the light source luminance is changed (B-D in the horizontal direction of Fig. 6(b)) or having smaller difference between the maximum level and the minimum level of the emission luminance of the light source.

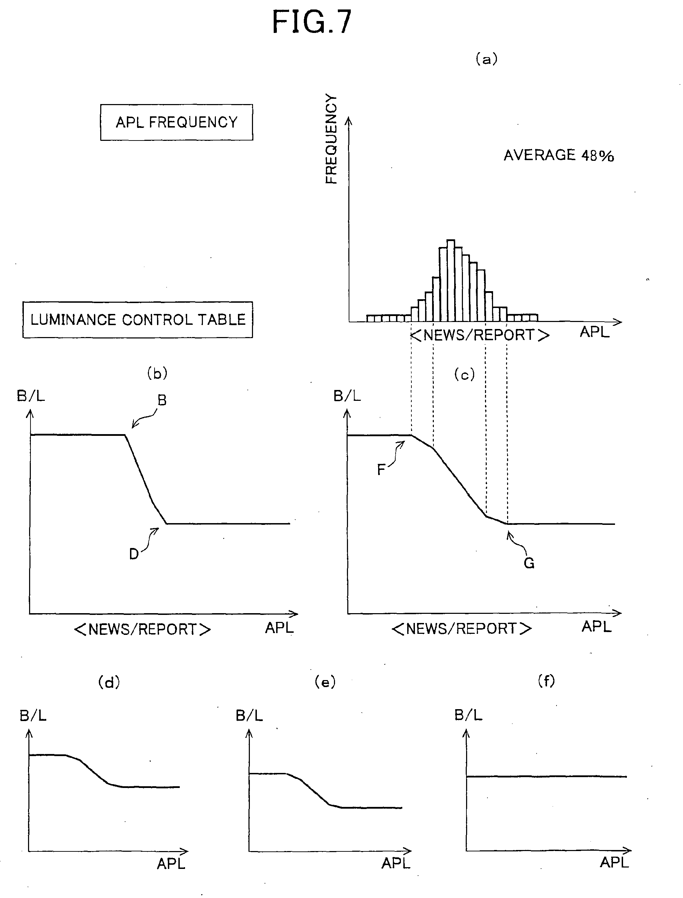

Fig. 7(c) shows an example of the luminance control table that makes the change in the emission luminance slower. As compared to the luminance control characteristic same as the characteristic in Fig. 6(b) shown in Fig. 7(b) as a comparison, it is understood that the APL range with the luminance change is greater.

In the news and report, the facts should be reported accurately. Therefore, it is desirable to perform direct video display to deliver information reliably regardless of whether the video signal is dark or bright.

From this view point, as shown in Fig. 7(d), the increase or decrease width of the emission luminance of the light source (width between B and D in the vertical axis direction in Fig. 6(b)) is reduced as compared to the characteristic of Fig. 7(b) to perform direct video display as much as possible. Since the news and report have many video shot in a studio, it can be said that many bright video exist due to the lighting in the studio. Therefore, as shown in Fig. 7(e), the luminance control characteristic may be used which totally reduces the emission luminance of the light source and which has the small increase or decrease width of the emission luminance of the light source. For the news and report, to attach great importance to report the facts accurately, as shown in Fig. 7 (f), the emission luminance of the light source can be a constant value without controlling the emission luminance of the light source depending on the input video feature quantity such as the APL.

As described above, by expanding the control region depending on the APL between B and D in the horizontal axis direction shown in Fig. 7(b) to the control region depending on the APL between F and G in the horizontal axis direction shown in Fig. 7(c) (expanding the main portion of the control area in the video feature quantity), the change in the emission luminance of the light source depending on the APL can be made slower.

By reducing the difference between the high constant value of the emission luminance of the light source at the low APL and the low constant value of the emission luminance of the light source at the high APL (difference between the maximum emission luminance and the minimum emission luminance), the change in the emission luminance of the light source can be made slower.

As above, if the genre information detecting unit 13 extracts the genre code in the major categories from the broadcast signal received by the tuner 11-2 and determines that the genre of the video displayed on the video displaying unit 16 is "news/report", it is suitable to control the emission luminance of the light source with the light source controlling unit 18 using any one of the luminance control tables of Figs. 7(b) to 7(f).

<Movie>

Referring to Fig. 5 (b), in the major category "movie" of the genre codes, the gross average of the luminance level of the input video signal is 25 %, which is lower than other genres. With regard to the appearance frequency of the video signal for each APL, the APL is mainly distributed in a lower portion.

Judging only by this result, from the standpoint of the above general control example, since many dark video are included, the luminance of the light source should be controlled to be increased to show the video beautifully, considering that the effect of the glare is not felt even if the luminance of the light source is increased.

However, since movies are watched for a long stretch of time with concentration, a particular condition exits which is that it is desirable to reduce stimulation to eyes of viewers as much as possible and to display the natural video into which viewers can be immersed. Furthermore, although video of a movie is generally dark, a bright scene tends to suddenly appear after a scene is changed.

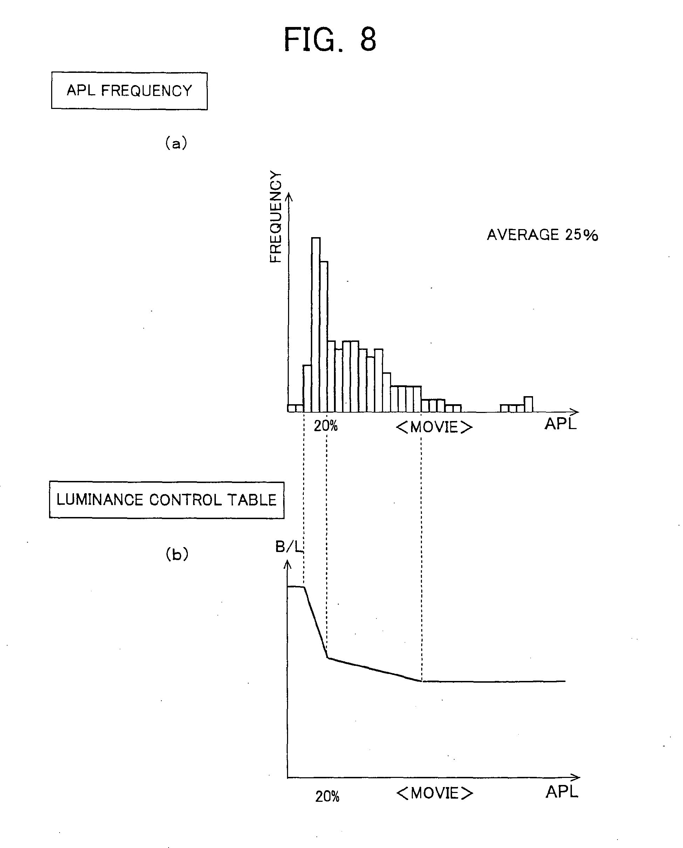

-Therefore, if the "movie" is displayed, as shown in Fig. 8(b), the luminance of the light source is preferably controlled to be luminance lower than average luminance to eliminate extremely bright display (or display time) regardless of whether the scene is a bright scene or a dark scene.

In this way, without feeling the glare, a viewer can feel the sense of reality as if watching a movie in a movie theater and the stimulation to eyes due to the sudden appearance of a bright scene can be alleviated. In Fig. 8(b), in a particularly dark scene, the luminance of the light source is increased to enhance the contrast feeling and to make captions easily read.

From the viewpoint of the power consumption, for example, if the emission luminance of the light source is set to be gradually reduced from the APL of 30 % as the APL increases to reduce the emission luminance of the light source sufficiently at the APL of 40 % which is a main portion of the typical video signal, since the APL with the highest appearance frequency is the APL of about 20%, the power consumption reducing effect is low.

When the emission luminance of the light source is controlled using the luminance control characteristic of Fig. 8(b), since the emission luminance of the light source is changed to be reduced at the APL of 20 %, the power consumption can be effectively reduced. Considering that a movie is the content that is watched for a long stretch of time, the power consumption reducing effect is dramatically improved.

If many dark video are included as in the case of movies, since the luminance of the displayed video is changed by reducing the luminance of the light source instead of contracting the video signal level to darken the luminance of the displayed video, a great advantage can also be obtained in that the luminance of the displayed video can be darkened while preventing the deterioration of the video quality in the darker video, such as gray scale level destruction.

Specifically, the gray scale level representation is typically represented with predetermined bits (e.g., 8 bits = 256 gray scale levels). For example, when the luminance of the input video signal is converted to a half luminance, if this conversion is attempted by processing the video signal level as in the case of the patent documents 4 and 5, all the input video signals are represented by 7 bits = 128 gray scale levels, and in the case of displaying the video of "movie" including a lot of low level video signals, the number of representable gray scale levels is reduced in dark portions, resulting in the gray scale level destruction. On the other hand, if the video luminance is reduced to half by constraining the emission luminance of the light source, since the display luminance suitable for "movie" is set while maintaining the shading display in the gray scale level representation of 8 bits = 256 gray scale levels, suitable video for the "movie" content can be displayed without reducing the quality of the displayed video.

<Cartoon/Special Effects>

Referring to Fig. 5 (c), in the major category "cartoon/special effects" of the genre codes, the gross average of the luminance level of the input video signal is 51 % and the appearance frequency of the video signal is distributed smoothly in a portion with somewhat high APL. Among the APL distributions in Figs. 5, the distribution of the input video signal of "cartoon/special effects" is similar to that of "news/report".

Therefore, only from the result of Fig. 5 (c), the control may be performed with the use of the luminance control table similar to that of the major category "news/report", however, when viewing cartoons, the following conditions exist.

According to the explanatory material "Guideline for video techniques in cartoons, etc." prepared by National Association of Commercial Broadcasters in Japan, it is reported that viewers, especially, many children were taken with fits during watching a cartoon program. According to this report, possible causes of the fits are as follows.

1. Blinking of video or light, especially, blinking of "bright red".
2. Inversion of high contrast screens or rapid scene changes.
3. Usage of regular patterns. To that end, the explanatory material describes the following regulations.

1. Blinking of video or light is avoided from being used more than three times per second as a general rule, and the following points are noted.

(1) Blinking of "Bright red" is treated with special care.
(2) On the premise of the condition of the section (1), if blinking exceeding three times per second is needed, the blinking is limited to five times or less and the luminance change in a screen is constrained to 20 percent or less. Additionally, the blinking is not used more than two seconds.

2. Inversion of high contrast screens and rapid scene changes with screen luminance change of more than 20 percent are not used more than three times per second as a general rule.
3. Regular patterns (such as striped patterns, scrolled patterns and concentric patterns) are avoided from occupying the most part of a screen.

Therefore, when a cartoon program is displayed, preferably, the screen luminance change is constrained and the effects of the rapid luminance changes to the human body are alleviated by reducing the emission luminance of the light source (above section 2.). By performing such control, the effects of the excessive blinking of the light to the human body also can be alleviated (above section 1.(2)). Heat generation and power consumption of the display apparatus can also be reduced during the display of the cartoon programs.

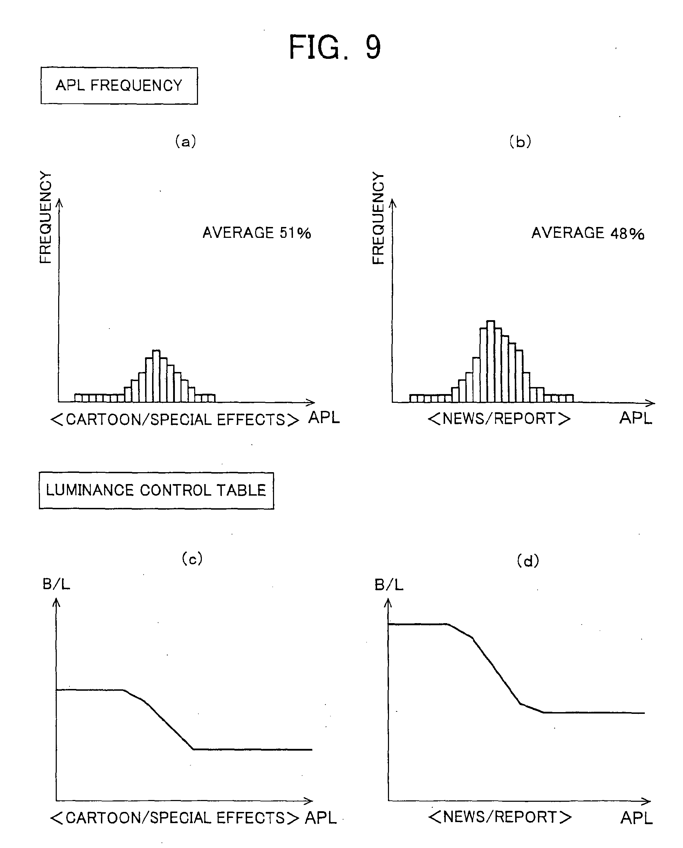

As above, when cartoons are displayed, as shown in Fig. 9 (c), the luminance of the light source is controlled to luminance lower than the average luminance. In Fig. 9 (d), the luminance control table of the news/report shown in Fig. 7 (e) is disposed side-by-side for comparison. Although the gross average and the distribution of the luminance levels of the input video signal are similar to those of the news/report, the width of the change in the emission luminance of the light source (difference between the maximum emission luminance value and the minimum emission luminance value of the light source) is narrowed and the luminance control characteristics are different.

Particularly, many viewers of cartoon programs are children and it is very important to alleviate the stimulations to eyes for persons in this age, whose eyesight is greatly influenced, from the standpoint of the video display good for children.

Since cartoons are painted with bright uniform colors and are simple images, unevenness, noises, and impurities are surfaced. Boundaries between colors tend to be blurred. Since the colors are bright, flickers are highly visible, and from these standpoints, when cartoon programs are displayed, it is preferred to reduce the emission luminance of the light source to constrain such effects.

As above, if the genre information detecting unit 13 extracts the genre code in the major categories from the broadcast signal received by the tuner 11-2 and determines that the genre of the video displayed on the video displaying unit 16 is "cartoon/special effects", the luminance of the light source may be controlled by the light source controlling unit 18 with the use of the luminance control characteristic like Fig. 9 (c).

<Sport (Soccer, Sumo/ Fighting Sport)>

The conditions have been examined for each major category of the genre codes as above, and consideration will then be made of the medium categories "soccer" and "sumo/fighting sport" in the major category "sport".

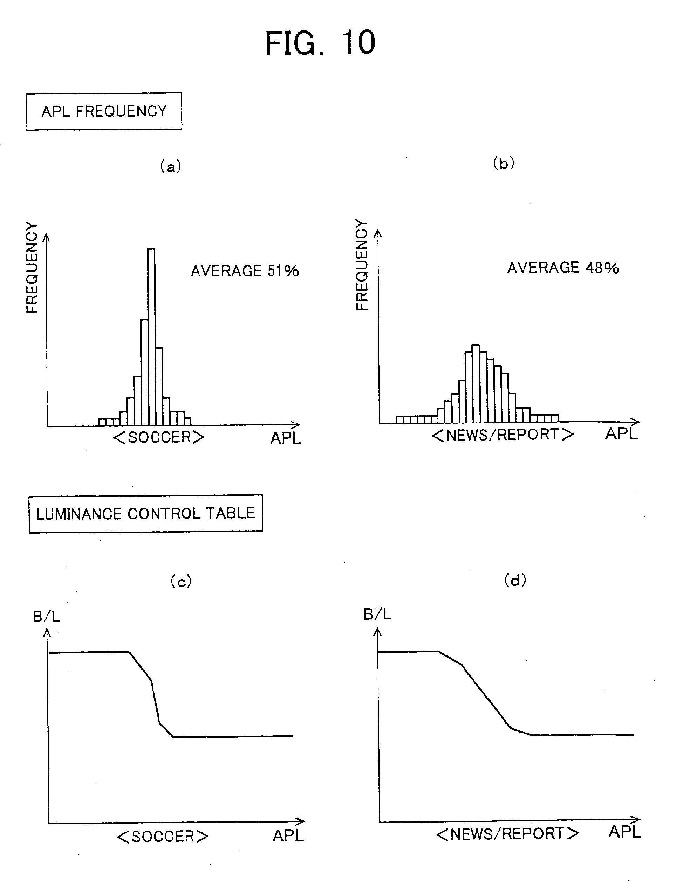

When the input video signal of the medium category "soccer" is compared with that of the major category "news/report", the averages of luminance are 51 % and 48 % as shown in Figs. 10, which have little difference.

However, in the case of soccer, many video of the grass is included and significant scene changes are few. This can be perceived from the comparison of the APL distributions shown in Figs. 10 (a) and 10 (b), since the APL distribution of the video signal of the medium category "soccer" is concentrated on a given APL range unlike the major category "news/report".

It can also be said that "soccer" is the content for viewers who want to watch the video with feeling of oneness.

Therefore, when the genre of the displayed video is the medium category "soccer", in the luminance control characteristic, the luminance of the light source is changed significantly in a certain APL range to present the sense of reality and to enable effective reduction of power consumption. Specifically, as shown in Fig. 10 (c), a luminance control table may be used to reduce the main control width of the emission luminance of the light source depending on the APL (width between the characteristic changing point corresponding to the lowest APL and the characteristic changing point corresponding to the highest APL of Fig. 10 (c)) and to make the slope steeper for the luminance control characteristic near the place where the peak exists for the appearance frequency of the APL of the video signal to change the emission luminance of the light source drastically. As compared to the luminance control characteristic of the news/report that performs smooth video display (Fig. 10 (d)), a distance between two approximate characteristic changing points corresponding to the APL (main control width) is reduced.

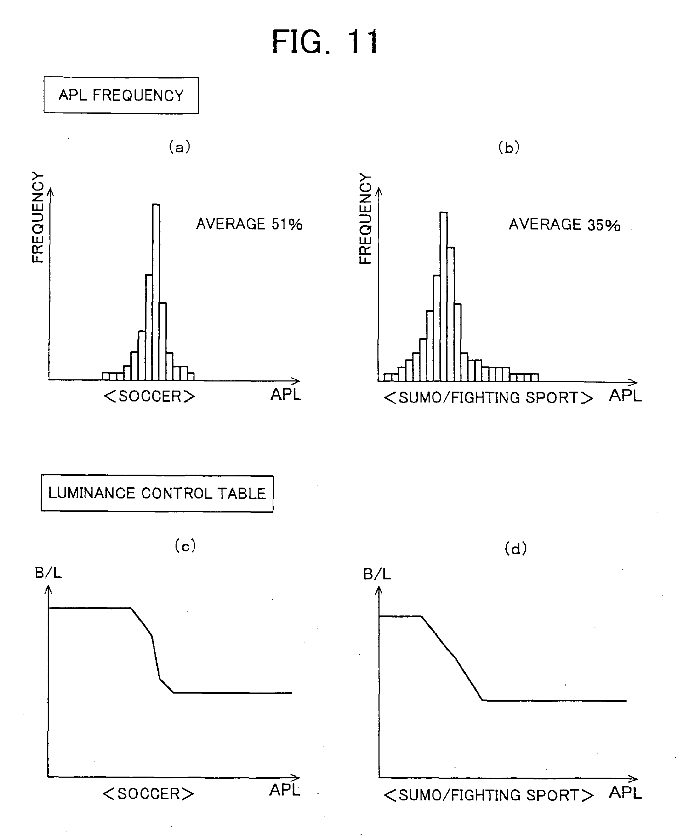

When the medium category "soccer" is compared to the medium category "sumo/fighting sport", "sumo/fighting sport" has low average luminance of 35% and the appearance frequency of the video signal is concentrated on a range with somewhat low APL for "sumo/fighting sport" as shown in Figs. 11. That is, "soccer" and "sumo/fighting sport" have different gross averages of the APL and different peak portions of the appearance frequencies of the video signal for each APL.

On this premise, for example if the display luminance of "sumo/fighting sport" is controlled using the luminance control table of soccer (Fig. 11 (c)), since the peak portions are different in the appearance frequencies of the video signal for each APL, the emission luminance of the light source becomes the maximum value in most scenes and the reducing effect in power consumption is completely eliminated.

Therefore, if the genre of the displayed video is "sumo/fighting sport", the emission luminance of the light source is changed in the APL range lower than that of "soccer". Two approximate characteristic changing points corresponding to the APL are located at lower portions than the case of "soccer".

Even if genres are the same in the major categories, conditions for the control may be different in the medium category genres, and if the luminance control table for each genre is applied to each medium category, "suitable" video display can be performed for each genre in more detail.

In another example of the light source luminance control based on the medium category genres, if the emission luminance of the light source is reduced in the case of medium categories "domestic cartoon" and "foreign cartoon" in the major category "cartoon/special effects", the luminance control table of Fig. 9 (c) can be used only when the content type is "cartoon" to perform more targeted control of the emission luminance of the light source. With regard to medium categories "classical music" and "rock music" in the major category "music", the emission luminance of the light source are preferably controlled with the use of different luminance control characteristics.

As described above, since the emission luminance of the light source is suitably set based on the genre information of the displayed video, the "suitable" display luminance can be achieved for each genre while maintaining the gray scale level representational power of the display device. By switching the emission luminance control characteristics corresponding to the feature quantity of the input video signal for each genre, the power consumption of the light source can be effectively reduced.

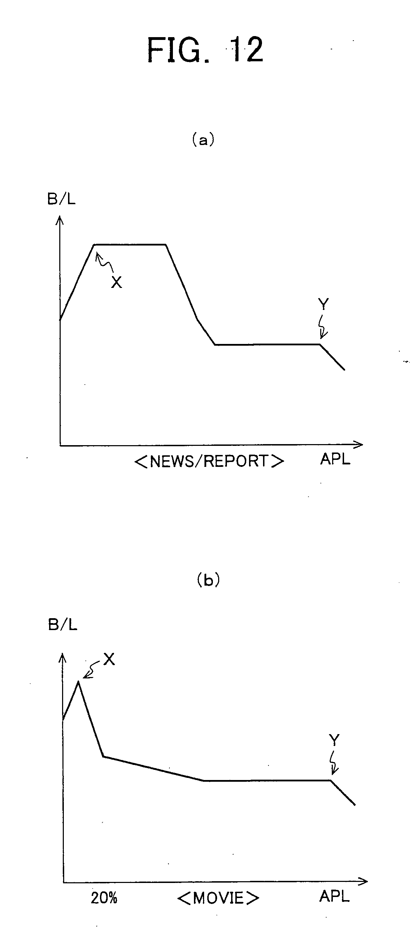

To further reduce the power consumption sufficiently, luminance control characteristics like Figs. 12 may be used. That is, in such characteristics, the emission luminance of the light source is reduced when the video feature quantity is extremely large or small. Describing the reason with the case of the luminance control characteristic of the genre "news/repot" (Fig. 12 (a)), since the video with extremely large APL, i.e., the video feature quantity, for example, near white video having the APL of 90% or higher is few in typical video as seen from the APL frequency of Fig. 6 (a) and such video exists only for a moment or exists in the case of scene changes, if any, the viewers feel little effects of the luminance reduction if the emission luminance of the light source is reduced when displaying such video. Since the video with extremely small APL, for example, near black video having the APL of 10% or less is also few in typical video, the emission luminance of the light source for displaying such video may be set to be reduced.

Although it may be considered that the characteristic for reducing the emission luminance of the light source for such video is not needed if few video have extremely large or small video feature quantity, since the power consumption of the backlight luminance becomes enormous as the display apparatuses grow in size recently and the power consumption at extremely large or small video feature quantity cannot be ignored, it is very important to take measures to reduce the power consumption in detailed portion as above.

Fig. 12 (b) shows the luminance control characteristic for reducing the luminance of the light source for extremely large or small video feature quantities. As compared to the luminance control characteristic of "news/report" of Fig. 12 (a), with regard to the characteristic changing point closer to the smallest APL, i.e., the video feature quantity, the characteristic changing point of "movie" is located at the position closer to the smallest APL than that of "news/report". This is because the many video signals of "movie" are darker than "news/report" as shown in the distribution diagram of the video signals of Figs. 5 (a) and 5 (b) and because adverse effects to delicate video expression for the dark video are intended to be eliminated by making the APL range, where the emission luminance of the light source is changed to be reduced from the maximum value, narrower than the case of "news/report" . In this way, the characteristic changing point closer to the largest video feature quantity and the characteristic changing point closer to the smallest video feature quantity are changed depending on the genres.

Although it has been described that "in Fig. 8 (b), in a particularly dark scene, the luminance of the light source is increased to enhance the contrast feeling and to make captions easily read" in the aforementioned general description of the luminance control characteristic of "movie", the prioritized characteristic in a particularly dark scene is depending on the design. The emission luminance may be set to be reduced only in the portion that is almost black (e.g., APL of 5 % or less).

Although, in the characteristics in Figs. 12, the emission luminance of the light source is reduced in the case where the video feature quantity is extremely large and the case where it is extremely small, a characteristic which reduces the emission luminance of the light source in only one of the above cases may be used, of course.

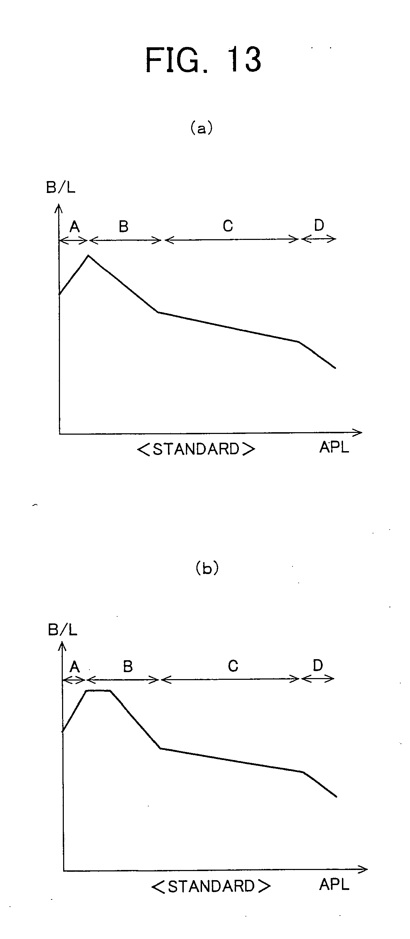

In the above description of the luminance control characteristic, except for Fig. 12 (b), the emission luminance value of the light source for the video feature quantity is constant in some portions. However, the constant emission luminance value of the light source is not the necessary condition of the luminance control characteristic, and as shown in Figs. 12 (b) and 13 (a), the characteristic may not have a portion with the constant emission luminance value of the light source for the video feature quantity. In the example of Fig. 13 (a), when the APL as the video feature quantity is low, to prevent black crushing in dark scenes and to enhance the contrast, the emission luminance of the light source is modulated to be increased as the APL decreases. When the APL is high, to avoid excessive brightness and glare in bright scenes, the emission luminance of the light source is modulated to be increased as the APL increases. When the APL is extremely low (region A of Fig. 13 (a)), the emission luminance of the light source is reduced as the APL decreases to achieve the reduction of the power consumption. When the APL is extremely high (region D of Fig. 13 (a)), the emission luminance of the light source is reduced as the APL increases to achieve the reduction of the power consumption. Since this characteristic can be applied to typical video, the luminance control characteristic of Fig. 13 has been described as the standard characteristic regardless of genres. However, the absence of the portion with the constant emission luminance value of the light source is not because of the standard characteristic, and the portion with the constant emission luminance value of the light source may exist as shown in Fig. 13 (b), of course.

If the displayed video genre is changed by switching programs or by channel switching operation by a viewer, the luminance control characteristic is changed by switching the luminance control tables used for controlling the emission luminance of the light source, and to prevent unnatural video display associated with abrupt changes in the luminance control characteristic, the currently selected luminance control characteristic is preferred to be gradually changed through a plurality of luminance control tables toward the target luminance control characteristic over time. For example, when the luminance control table corresponding to the genre "movie" is switched to the luminance control table corresponding to the genre "news/report", even though the screens have the same APL, a viewer may experience discomfort such as too much brightness or strong stimulations to eyes as a result of abrupt switching from the luminance control characteristic for the low emission luminance of the light source to the luminance control characteristic for the high emission luminance of the light source.

To prevent this discomfort, it is preferred to prepare several tables having luminance control characteristics intermediate between the luminance control characteristics of "movie" and "news/report" and to constrain the abrupt changes in display luminance by gradually switching the tables every several seconds in sequence.

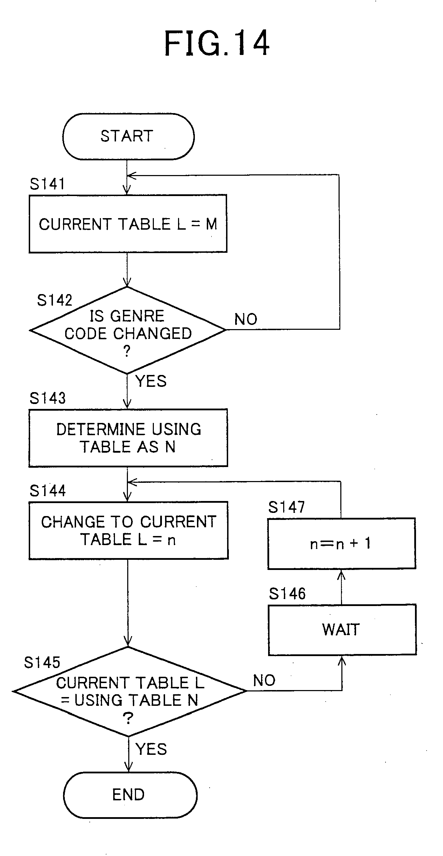

Fig. 14 is a flowchart of the operation for preventing the abrupt luminance changes in the light sources by preparing several tables and by changing the table number. This operation will hereinafter be described.

If a number for a currently referenced table L ("L" is a variable representing a current table) is M ("M" is a table number selected before changing a genre code) (Step S141), when it is detected that a genre code separated/obtained from the broadcast signal is changed ("YES" of Step S142), a number for a using table corresponding to a changed genre' code is determined with this detection (Step S143) (in this case, the using table number is determined as "N"). For the current table L, a table n is selected which is closest to the luminance control characteristic of the current table L (=M) among a plurality of tables intermediate between the luminance control characteristics of the determined using table N and the current table L (=M), and the current table L is updated with the table n (Step S144). It is determined whether the current table L (=n) is identical to the using table N (Step S145). If not identical, after waiting for certain time (e.g., one second) (Step S146), a table n+1 is selected which has the luminance control characteristic of the table next closest to the table M among a plurality of tables intermediate between the tables M and N (S147), and the current table L is updated with the table n+1 (S144). Steps S145, S146, S147, and S144 are repeated in S145 until the current table L = N in Step S145, and when the current table L = N, the change to the using table corresponding to the changed genre code is completed.

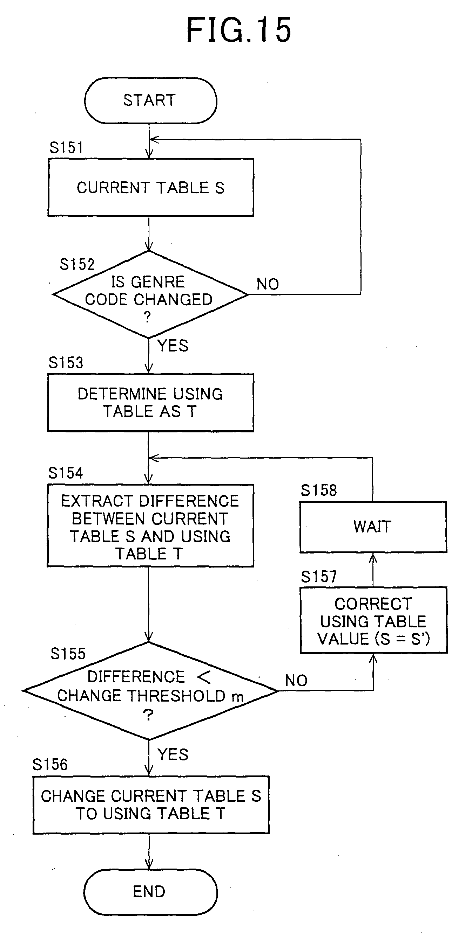

Fig. 15 is a flowchart of the operation for gradually shifting to a luminance control characteristic of a changed table with calculations when the table number is changed, instead of preparing a plurality of tables intermediate between the current table and the using table. This operation will hereinafter be described.

If a number for a currently referenced table is S (Step S151), when it is detected that a genre code separated/obtained from the broadcast signal is changed ("YES" of Step S152), a number for a using table corresponding to a changed genre code is determined with this detection (Step S153) (in this case, the table number is determined as T). A difference between the current table S and the determined using table T is extracted in the emission luminance for the video feature quantity of the input video signal, and it is determined whether the difference is smaller than a predetermined threshold m (Step S155). If it is determined that the difference is equal to or more than the threshold m, to reduce the difference, S is corrected to S' such that the emission luminance characteristic based on the table S for the video feature quantity of the input video signal is approximated to the emission luminance characteristic based on the table T by a predetermined value (Step S157) ; after waiting for certain time (e.g., one second) (Step S158), the procedure goes back to Step S154 to extract a difference between the corrected current table S (S updated with S') and the using table T; and the difference is compared to the threshold m. The operations of Steps S155, S157, S158, and S154 are repeated until the difference becomes smaller than the threshold m, and when the difference becomes smaller than the threshold m, the current table S is changed to the using table T.

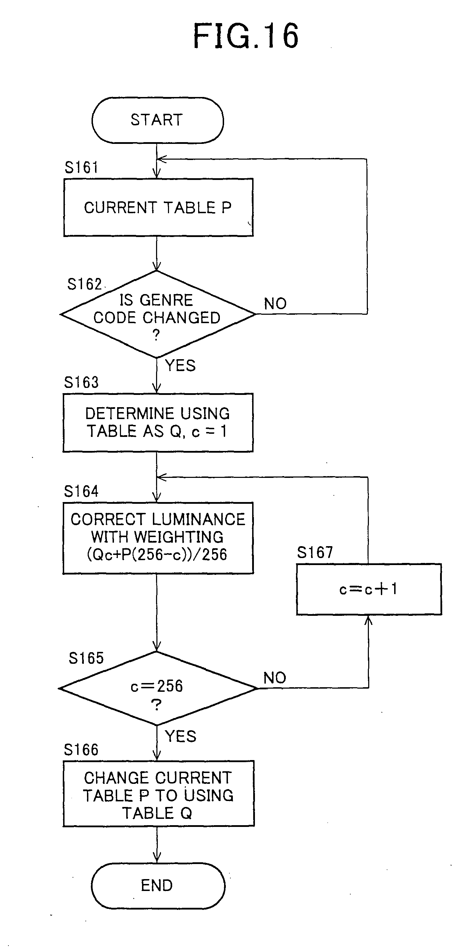

Fig. 16 is a flowchart of the operation for gradually shifting to a luminance control characteristic of a changed table by changing the luminance for the predetermined number of times. With reference to Fig. 16, description will hereinafter be made of the operation changing the luminance control characteristic in 256 frames.

If a number for a currently referenced table is P (Step S161), when it is detected that a genre code separated/obtained from the broadcast signal is changed ("YES" of Step S162), a number for a using table corresponding to a changed genre code is determined with this detection (in this case, the table number is determined as Q). At the same time, a number of changing times c is set to 1 (Step S163). The changing luminance due to the weighting of the current table P and the determined using table Q is calculated to correct the luminance (Step S164).

$$\text{Corrected luminance } P' = (Qc + P(256 - c)) / 256$$

$$\text{(equation 1)}$$

It is checked whether c = 256 or not (whether the luminance is corrected for 256 times that is the set number of times) (Step S165), and if the set number of times is not reached, a count value c is updated by 1 (Step S167), the current luminance is corrected to P' using the above equation again. The operations of Steps S164, S165, and S167 are repeated for a predetermined times, and if the operations are performed for the set number of times, i.e., 256 times, the current table P is finally changed to the using table Q. Although the above example is an example for changing the luminance table gradually in 256 frames, this is not limited to 256 frames, and the smoothness of the change (transition time) can be adjusted by setting a predetermined number of times.

As described above, abrupt switching of the emission luminance of the light source due to change of genre of the displayed video can be prevented.

Although the genre codes are currently prescribed only with "major categories" and "medium categories" in the standard of digital broadcasting, it is expected that the minor category standard may be prescribed in future change or version upgrade of the standard, and in such case, more detailed and suitable video display can be performed by controlling the emission luminance of the light source depending on the condition for each minor category.

The aforementioned luminance control tables may not be prepared to the number of the major categories or medium categories and, for example, with regard to individual conditions relating to the emission control of the light source, since it can be said that the major category "movie" and a medium category "historical drama" in the major category "drama" have similar conditions, the luminance control table may be used in common.

Contrary, the number of the luminance control tables may exceed the number of the major categories or medium categories. For example, Figs. 7 (c) to 7 (f) illustrate four candidates of the luminance control table used for the major category "news/report", and these candidates may be switched and used depending on other conditions (e.g., brightness of a viewing environment) to perform more detailed control.

Other than the case that the emission luminance of the light source can be controlled depending on the genre information as described above, the genre information may not be obtained. Alternatively, the genre information may not be effectively obtained as in the case that the genre code is the major category "others". In such a case, by referring to the viewing history of a user and by estimating that the genre frequently watched by the user in the past is the genre of the video to be displayed, the luminance control table corresponding to the genre may be used to control the emission luminance of the light source. Alternatively, a "standard" luminance control table (e. g. , the characteristic shown in Fig. 13) may be prepared to use. Or the luminance control table may not be used (the luminance value of the light source is kept constant).

Although the emission luminance of the light source is controlled depending on the APL when the video feature quantity of the input video signal is the APL in the above description, this is not limitation and a state of peak luminance (presence or degree) in one frame of the input video signal may be obtained and utilized in the control of the light source luminance.

In this case, if the peak luminance should be represented for each genre, peaks can be highlighted by controlling the emission with higher light source luminance to represent beautiful video, and in the genre with less need to represent the peak luminance, the emission luminance can be reduced as much as possible to reduce the power consumption of the light source.

Similarly, the maximum and minimum luminance levels and luminance distribution status (histogram) in a predetermined region (period) of one frame may be used for the video feature quantity of the input video signal, or the emission luminance of the light source may be variably controlled based on the video feature quantity obtained by combining these levels and status.

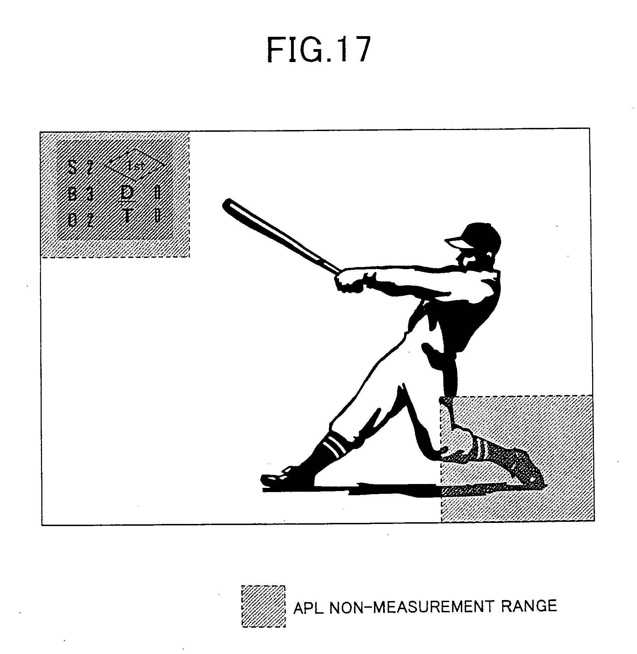

To obtain the APL, the average value of the luminance levels may not be obtained from all the video signals in one frame, and for example, the average value of the luminance levels may be obtained from the video signals near the center excluding the edges of the display video and may be used as the video feature quantity. For example, gate control is performed based on the genre information separated/obtained from the broadcast reception signal such that preset screen region (where characters-/symbols are likely to be superimposed) is excluded, and the video feature quantity is measured only in a predetermined fractional region. Fig. 17 shows a concept of the exclusion area of the APL measurement if the genre is the medium category "baseball".

When the emission luminance of the light source is switched depending on the feature quantity of the input video signal, if the switching is performed gradually by applying a time constant, abrupt luminance change is not caused and this is preferred from the viewpoint of the stimulations and discomfort of eyes.

Although the above description shows an example of controlling the emission luminance of the light source by selecting the luminance control table depending on the genre information, the luminance control characteristic may be changed by calculations depending on the genre information. In this case, a plurality of function expressions may be prepared which have coefficients changed depending on the feature quantity of the input video signal and a predetermined function expression may be selected depending on the genre of the video that is to be displayed.

In addition to automatically switching the emission luminance characteristics of the light source depending on the genre information, if a user can select the luminance control characteristic with a remote controller, etc., usability is enhanced since the user can use a desired luminance control characteristic. A function for changing the luminance control characteristic of the light source depending on the genre may be switched to be enabled or disabled.

Although the luminance control characteristic of each control table has been described like a linear characteristic, the characteristic may be nonlinear, of course. When the luminance control characteristic is nonlinear, the luminance control characteristic can be compared to the aforementioned linear luminance control characteristic by approximating the nonlinear luminance control characteristic to the linear luminance control characteristic and by assuming approximate changing characteristic points.

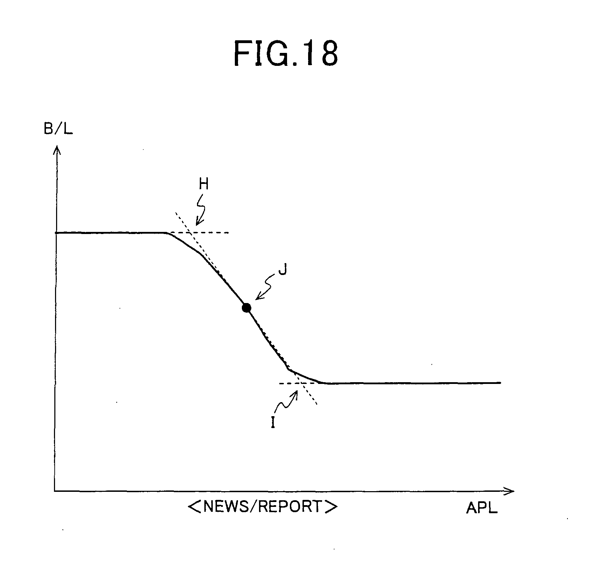

This will be specifically described. For example, it is assumed that the luminance control characteristic with the major category "news/report" as the genre is a nonlinear characteristic shown in Fig. 18. When linear approximation is performed, this nonlinear characteristic can be approximated to three lines shown by dotted lines of Fig. 18. The three lines are: (1) a line that defines the emission luminance of the light source for video with low APL as a high constant value; (2) a line that defines the emission luminance of the light source for video with high APL as a low constant value; and (3) a line that approximates, with a single slope, the nonlinear curve varying the emission luminance of the light source for video with APL values between the above low and high APL depending on APL. The line of (3) is prescribed by a slope at an inflexion point J of the nonlinear curve, for example.

In this way, by performing the linear approximation of the nonlinear luminance control characteristic, the characteristic changing points can be assumed to be intersecting points (H and I in the example of Fig. 18) of lines, and the assumed characteristic changing points are defined as approximate characteristic changing points. When the approximate characteristic changing points are considered in the same way as the characteristic changing points, even in the case of the nonlinear luminance control characteristic, the expansion of the main control width for the APL, etc. can be achieved as is the case with the linear luminance control characteristic.

The number of the approximated lines is not limited to three, and four or more lines may be used for approximation. For example, if four lines are used for approximation, three approximate characteristic changing points exist. Although the emission luminance of the light source for the entire screen is uniformly and variably controlled depending on the video feature quantity in the predetermined region in one frame in the above embodiment, the present invention may be applied to a liquid crystal display apparatus which separates screen into plural regions and which controls the emission luminance of the light source for each separated screen region independently and variably depending on the feature quantity of the video signal displayed on each separated screen region.

<Second Embodiment>

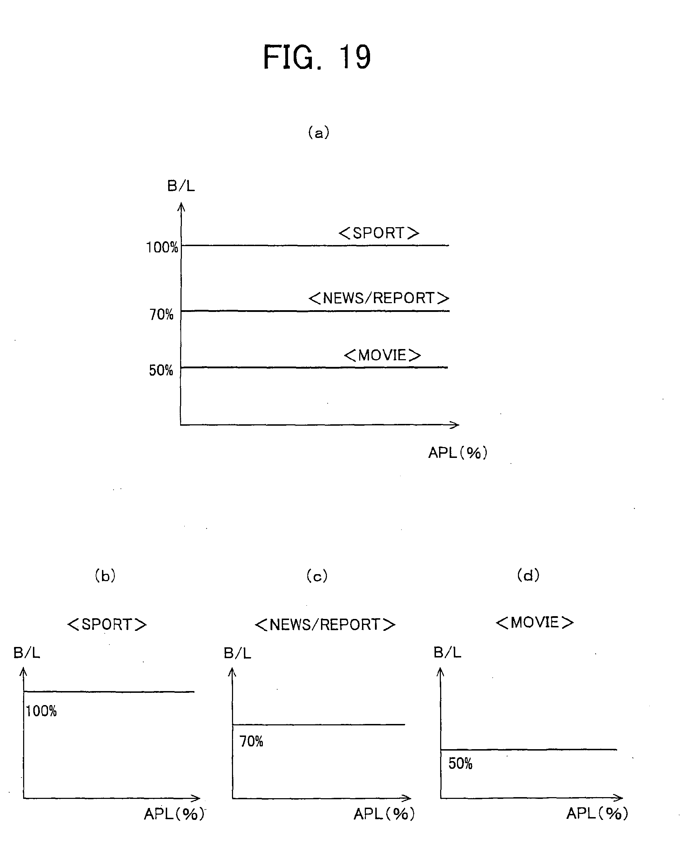

Description will be made of a second embodiment of the present invention. Although a block diagram of a display apparatus according to this embodiment is the same as Fig. 1 used in the first embodiment, the setting of the light source luminance is simplified and a constant luminance level is maintained regardless of the feature quantity of the input video signal in this embodiment. Specifically, as shown in Figs. 19 (b) to 19 (d), a predetermined light source luminance is set for each genre of video that is to be displayed, and the light source luminance levels are stored in a storage device such as ROM.

Sport is set to high light source luminance to enhance dynamic sense of reality (Fig. 19 (b)). News/report is set to somewhat high light source luminance since it is preferred to report the facts faithfully (Fig. 19 (c)). Movies are set to low light source luminance since movies are content watched immersively for a long stretch of time in a dark viewing environment (Fig. 19 (d)).

When the luminance value of the light source is changed, it is important to change the value while maintaining the chromaticity of the light source. Especially, if the light source is LEDs, etc. composed of blue, red, and green, the emission luminance of the light source should be controlled while maintaining the white balance, obtained by mixing these colors, approximately constant.

As is the case with the first embodiment, in addition to the genre information of the displayed video as described above, if illuminance information obtained by detecting the brightness of the viewing environment is used to control the emission luminance of the light source, the light source control can be achieved more effectively.

The light source luminance control operation for each genre may be arbitrarily selected to be turned on/off by a user.

<Third Embodiment>

Description will be made of a third embodiment of the present invention. Although the first and second embodiments describe the display apparatus that only performs the control for reducing the emission luminance of the light source when the APL of the input video signal increases, it is described in this embodiment that the video signal processing may be applied as well as the light source control.

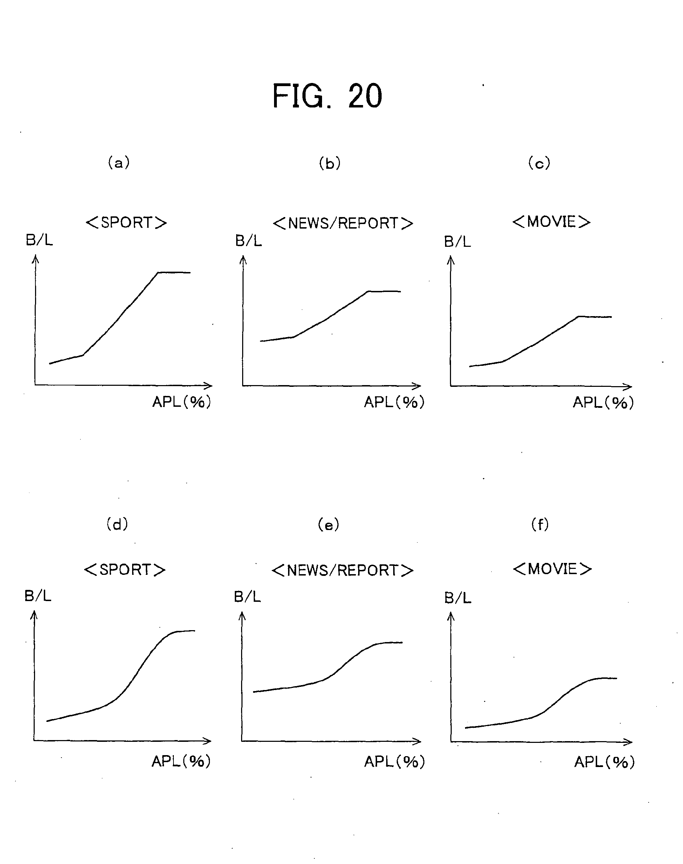

Fig. 20 show examples of the luminance control table for each genre (major category) according to the embodiment. The luminance control characteristic of the embodiment is different from the first embodiment and is a luminance control characteristic increasing the emission luminance of the light source as the APL, i.e., the video feature quantity of the input video signal increases. Since it can be said that the video with low APL is generally dark video, this is for the purpose of sufficiently constraining the black level to enhance contrast feeling by reducing the light source luminance and by extending the video signal levels to expand the dynamic range when the video is dark. Similarly, for the video with high APL, the video signal levels are compressed and the emission luminance of the light source is increased to constrain the generation of white crushing.

In this way, the present invention may be applied when the contrast feeling of the displayed video is enhanced by performing the emission luminance control of the light source depending on the feature quantity of the input video signal as well as by performing the extending and compressing processing of the video signal, and in such a case, by performing the suitable light source control for each content type, the power consumption can be reduced while maintaining the contrast feeling.

In the above embodiment, the optimal video expression for each content type can be performed by combining the suitable control of the emission luminance of the light source with the changes in the gray scale level transformation characteristics such as gamma correction and contrast correction. For example, since there are many video with low APL in movies, the power of expression in the low gray scale level portion is enhanced by performing the gray scale level transformation with the use of the characteristic shown by a curve D of Fig. 23. Since there are many video with high APL in sport, the power of expression in the high gray scale level portion is enhanced by performing the gray scale level transformation with the use of the characteristic shown by a curve E. In the case of news/report, the video may be displayed with the characteristic of a line A of Fig. 23 without the gray scale level transformation.

If the gray scale level transformation processing is performed for the video signal at this point, the reduction of the number of the representable gray scale level is caused from the aforementioned reason, and therefore, a reference gray scale level voltage driving the liquid crystal display panel may be varied depending on the input video signal. Specifically, a plurality of predetermined reference gray scale level voltage data is stored, and by switching and selecting the data depending on the genre of the displayed video, the optimum gamma correction or contrast correction can be performed for each content type.

In this embodiment, the luminance control characteristic may be the linear characteristic such as Figs. 23 (a) to 23 (c) or the nonlinear characteristic such as Figs. 23 (d) to 23 (f).

<Fourth Embodiment>

This embodiment uses the display apparatus when the light sources of the backlight light are the LEDs as shown in Fig. 3. A block diagram is the same as that of Fig. 1.

Typically, the LED light source includes three primary color light sources, which are an R (red) light source, a G (green) light source, and a B (blue) light source. Therefore, by controlling the light source of each color separately, a video display surface can be affected in color.

According to the explanatory material "Guideline for video techniques in cartoons, etc." shown in the first embodiment, blinking of video or light, especially, blinking of "bright red" must be avoided to prevent a fit from being triggered. The embodiment is characterized in that the blinking of "bright red" is alleviated by utilizing that the light source is the LED light source.

Specifically, when the genre code is extracted by the genre detecting unit 13 and when it is determined that the genre of the video displayed on the liquid crystal panel 16 is the major category "cartoon/special effects", the controlling unit 14 supplies the light source controlling unit 18 with a control signal to increase the emission luminance of the blue light source.

This is because it is considered to be useful to increase a degree of influence of blue for alleviating the effects to the human body due to the red blinking.

In this way, the effects of the blinking of the red light source to the human body can be alleviated and the video display good for viewers can be performed.

When the genre code is extracted by the genre detecting unit 13 and when it is determined that the genre displayed on the liquid crystal panel 16 is the major category "cartoon/special effects", the controlling unit 14 may supply the light source controlling unit 18 with a control signal to decrease the emission luminance of the red light source.

The effects of the blinking of the red light source to the human body can be alleviated by such light source luminance control and the increase of the heat generation and power consumption of the light source can be constrained, which is an important problem of the liquid crystal display apparatus.

The emission luminance of the red light source may be controlled to be reduced while the emission luminance of the blue light source is controlled to be increased, of course.

In the embodiment, a distance sensor 21 is preferably provided to control the emission intensity of the light source depending on a distance to a viewer.

Although the description has been made in the embodiment with an example of the liquid crystal display apparatus including the LED light sources, the embodiment can be applied to any video display apparatus that can control RGB separately to affect the video display surface in color.

The medium categories may also be used for the genre codes, of course.

If the LED light sources are used as in the embodiment, the light source luminance can be easily controlled depending on the feature quantity of the input video signal for each divided screen region.

INDUSTRIAL APPLICABILITY

The present invention can be applied to a video display apparatus that uses light modulation elements and light sources of the backlight to display video, such as a liquid crystal display apparatus.

**Claims**

1. A liquid crystal display apparatus comprising:

   a liquid crystal panel that displays video, and a light source that illuminates the liquid crystal panel,

   wherein an emission luminance characteristic of the light source for a feature quantity of an input video signal is changed depending on a genre of video displayed on the liquid crystal panel.

2. The liquid crystal display apparatus of claim 1, wherein by changing the emission luminance characteristic of the light source for the feature quantity of the input video signal, a characteristic changing point is changed, the characteristic changing point being a point where a slope indicating the emission luminance characteristic of the light source for the video feature quantity is changed.

3. The liquid crystal display apparatus of claim 1, wherein by changing the emission luminance characteristic of the light source for the feature quantity of the input video signal, an approximate characteristic changing point is changed, the approximate characteristic changing point indicating an intersecting point when the emission luminance characteristic corresponding to the video feature quantity is approximated by lines.

4. The liquid crystal display apparatus of any one of claims 1 to 3, wherein by changing the emission luminance characteristic of the light source for the feature quantity of the input video signal, a difference between the maximum value and minimum value of the emission luminance of the light source is changed.

5. The liquid crystal display apparatus of any one of claims 1 to 4, wherein the input video signal is extended or compressed and wherein the emission luminance characteristic of the light source for the feature quantity of the input video signal is changed.

6. The liquid crystal display apparatus of any one of claims 1 to 4, wherein a gray scale level transformation characteristic for the input video signal is changed and wherein the emission luminance characteristic of the light source for the feature quantity of the input video signal is changed.

7. The liquid crystal display apparatus of any one of claims 1 to 6, wherein the change in the emission luminance of the light source is performed based on a lookup table selected depending on the genre of the video displayed on the liquid crystal panel.

8. The liquid crystal display apparatus of any one of claims 1 to 6, wherein the change in the emission luminance of the light source is performed based on a computing equation selected depending on the genre of the video displayed on the liquid crystal panel.

9. The liquid crystal display apparatus of claim 8, wherein the computing equation is a function expression for obtaining the emission luminance of the light source corresponding to the feature quantity of the input video signal.

10. The liquid crystal display apparatus of any one of claims 1 to 9, wherein the feature quantity of the input video signal is an average picture level of the input video signal.

11. A liquid crystal display apparatus comprising:

   a liquid crystal panel that displays video, and a light source that illuminates the liquid crystal panel with white light,

wherein, depending on a genre of the video displayed on the liquid crystal panel, increase and decrease of the emission luminance of the light source are adjusted while maintaining approximately constant chromaticity of the white.

12. The liquid crystal display apparatus of any one of claims 1 to 11, wherein the genre of the video displayed on the liquid crystal panel is determined by a genre code multiplexed in the input video signal.

13. The liquid crystal display apparatus of any one of claims 1 to 11, wherein the genre of the video displayed on the liquid crystal panel is determined based on the past viewing history information.

# FIG.1

11

| 11-1 | 11-2 | 11-3 |
|---|---|---|
| EXTERNAL SIGNAL (RECORD REPRODUCTION SIGNAL INCLUDING EPG INFORMATION) | TUNER (BS/TERRESTRIAL DIGITAL BROADCASTING) | NETWORK (INFORMATION ABOUT TV BROADCASTING) |

LCD CONTROLLER ~17

15 VIDEO ADJUSTING UNIT

VIDEO DISPLAYING UNIT (LIQUID CRYSTAL PANEL) ~16

12 DECODER

14 CONTROLLING UNIT

LIGHT SOURCE CONTROLLING UNIT ~18

13 GENRE INFORMATION DETECTING UNIT

# FIG.2

# FIG.3

# FIG.4

| NEWS/ REPORT | SPORT | INFORMATION /TABLOID SHOW | DRAMA | MUSIC | VARIETY | MOVIE | CARTOON /SPECIAL EFFECTS |
|---|---|---|---|---|---|---|---|
| DOCUMENTARY /CULTURE | STAGE/ PERFORMANCE | HOBBY/ EDUCATION | WELFARE | ADDITION | EXPANSION | OTHERS | |

| MAJOR CATEGORIES OF GENRES | MEDIUM CATEGORIES OF GENRES | DESCRIPTION |
|---|---|---|
| 0x0 | * | NEWS/REPORT |
| 0x0 | 0x0 | REGULAR/GENERAL |
| 0x0 | 0x1 | WEATHER |
| 0x0 | 0x2 | SPECIAL/DOCUMENTARY |
| 0x0 | 0x3 | POLITICS/DIET |
| 0x0 | 0x4 | ECONOMY/MARKET |
| 0x0 | 0x5 | FOREIGN/INTERNATIONAL |
| 0x0 | 0x6 | ANALYSIS |
| 0x0 | 0x7 | DEBATE/INTERVIEW |
| 0x0 | 0x8 | SPECIAL REPORT |
| 0x0 | 0x9 | LOCAL/COMMUNITY |
| 0x0 | 0xA | TRAFFIC |
| 0x0 | 0xB | |
| 0x0 | 0xC | |
| 0x0 | 0xD | |
| 0x0 | 0xE | |
| 0x0 | 0xF | OTHERS |
| | | |
| 0x1 | * | SPORT |
| 0x1 | 0x0 | SPORT NEWS |
| 0x1 | 0x1 | BASEBALL |
| 0x1 | 0x2 | SOCCER |
| 0x1 | 0x3 | GOLF |
| 0x1 | 0x4 | OTHER BALL SPORTS |
| 0x1 | 0x5 | SUMO/FIGHTING SPORT |
| 0x1 | 0x6 | OLYMPICS/INTERNATIONAL CONVENTION |
| 0x1 | 0x7 | MARATHON/ATHLETICS/SWIMMING |
| 0x1 | 0x8 | MOTOR SPORT |
| 0x1 | 0x9 | MARINE/WINTER SPORT |
| 0x1 | 0xA | HORSE RACE/PUBLIC RACE |
| 0x1 | 0xB | |
| 0x1 | 0xC | |
| 0x1 | 0xD | |
| 0x1 | 0xE | |
| 0x1 | 0xF | OTHERS |

# FIG. 5

(a)

AVERAGE 48%

FREQUENCY

<NEWS/REPORT> APL

(b)

AVERAGE 25%

FREQUENCY

<MOVIE> APL

(c)

AVERAGE 51%

FREQUENCY

<CARTOON/SPECIAL EFFECTS> APL

(d)

AVERAGE 51%

FREQUENCY

<SOCCER> APL

(e)

AVERAGE 35%

FREQUENCY

<SUMO/FIGHTING SPORT> APL

# FIG. 6

APL FREQUENCY

(a)

FREQUENCY

AVERAGE 48%

A

E

B

C

D

<NEWS/REPORT>

APL

LUMINANCE CONTROL TABLE

(b)

B/L

A

B

$X_3$

$X_1$

D

$X_2$

C

E

<NEWS/REPORT>

APL

# FIG.7

(a)

APL FREQUENCY

LUMINANCE CONTROL TABLE

FREQUENCY

AVERAGE 48%

<NEWS/REPORT>    APL

(b)

B/L

B

D

<NEWS/REPORT>    APL

(c)

B/L

F

G

<NEWS/REPORT>    APL

(d)

B/L

APL

(e)

B/L

APL

(f)

B/L

APL

EP 1 865 488 A1

# FIG. 8

APL FREQUENCY

(a)

LUMINANCE CONTROL TABLE

(b)

# FIG. 9

APL FREQUENCY

(a)

AVERAGE 51%

FREQUENCY

<CARTOON/SPECIAL EFFECTS> APL

(b)

AVERAGE 48%

FREQUENCY

<NEWS/REPORT> APL

LUMINANCE CONTROL TABLE

(c)

B/L

<CARTOON/SPECIAL EFFECTS> APL

(d)

B/L

<NEWS/REPORT> APL

# FIG. 10

APL FREQUENCY

(a)

FREQUENCY

AVERAGE 51%

<SOCCER>　　APL

(b)

FREQUENCY

AVERAGE 48%

<NEWS/REPORT>　　APL

LUMINANCE CONTROL TABLE

(c)

B/L

<SOCCER>　　APL

(d)

B/L

<NEWS/REPORT>　　APL

# FIG. 11

APL FREQUENCY

(a)

FREQUENCY

AVERAGE 51%

<SOCCER>                    APL

(b)

FREQUENCY

AVERAGE 35%

<SUMO/FIGHTING SPORT>    APL

LUMINANCE CONTROL TABLE

(c)

B/L

<SOCCER>                    APL

(d)

B/L

<SUMO/FIGHTING SPORT>    APL

# FIG. 12

(a)

(b)

# FIG. 13

(a)

(b)

# FIG.14

START

S141
CURRENT TABLE L = M

S142
IS GENRE CODE CHANGED ? — NO

YES

S143
DETERMINE USING TABLE AS N

S144
CHANGE TO CURRENT TABLE L = n

S147
n = n + 1

S146
WAIT

S145
CURRENT TABLE L = USING TABLE N ? — NO

YES

END

# FIG.15

START

S151

CURRENT TABLE S

S152

IS GENRE CODE CHANGED ? — NO

YES

S153

DETERMINE USING TABLE AS T

S154

EXTRACT DIFFERENCE BETWEEN CURRENT TABLE S AND USING TABLE T

S158

WAIT

S157

CORRECT USING TABLE VALUE (S = S')

S155

DIFFERENCE < CHANGE THRESHOLD m ? — NO

YES

S156

CHANGE CURRENT TABLE S TO USING TABLE T

END

# FIG.16

START

S161

CURRENT TABLE P

S162 — IS GENRE CODE CHANGED ? — NO

YES

S163

DETERMINE USING TABLE AS Q, c = 1

S164

CORRECT LUMINANCE WITH WEIGHTING $(Qc+P(256-c))/256$

S167

$c = c + 1$

S165 — $c = 256$ ? — NO

YES

S166

CHANGE CURRENT TABLE P TO USING TABLE Q

END

# FIG.17

APL NON-MEASUREMENT RANGE

# FIG.18

# FIG. 19

(a)

B/L

100% ─────────────────────── <SPORT>

70% ─────────────────────── <NEWS/REPORT>

50% ─────────────────────── <MOVIE>

APL(%)

(b)

<SPORT>

B/L

100% ───────────────

APL(%)

(c)

<NEWS/REPORT>

B/L

70% ───────────────

APL(%)

(d)

<MOVIE>

B/L

50% ───────────────

APL(%)

# FIG. 20

(a)

<SPORT>

B/L

APL(%)

(b)

<NEWS/REPORT>

B/L

APL(%)

(c)

<MOVIE>

B/L

APL(%)

(d)

<SPORT>

B/L

APL(%)

(e)

<NEWS/REPORT>

B/L

APL(%)

(f)

<MOVIE>

B/L

APL(%)

# FIG. 21

(a)

(b)

| GENRE CODE No. | GENRE NAME | LUMINANCE PROCESSING (MODE) |
|---|---|---|
| 001-A | FOREIGN MOVIE (ACTION) | CINEMA 1 |
| ⋮ | ⋮ | ⋮ |
| 003-B | SPORT (BASEBALL) | SPORT 1 |
| ⋮ | ⋮ | ⋮ |

EP 1 865 488 A1

# FIG. 22

(a)

(b)

| GENRE CODE No. | LUMINANCE ADJUSTMENT AMOUNT | VOLUME ADJUSTMENT AMOUNT |
|---|---|---|
| 031(MOVIE) | −10% | 0 |
| 001(NEWS) | 0 | +10% |
| 016(MUSIC) | 0 | −10% |
| 056(ADULT) | 0 | −40% |

EP 1 865 488 A1

# FIG.23

GRAY SCALE LEVEL
OF OUTPUT VIDEO

GRAY SCALE LEVEL
OF INPUT VIDEO

<table>
<tr><td colspan="2">**INTERNATIONAL SEARCH REPORT**</td><td>International application No.</td></tr>
<tr><td colspan="2"></td><td>PCT/JP2006/304059</td></tr>
</table>

A. CLASSIFICATION OF SUBJECT MATTER
*G09G3/36*(2006.01), *G02F1/133*(2006.01), *G09G3/20*(2006.01), *G09G3/34* (2006.01), *H04N5/57*(2006.01), *H04N5/66*(2006.01)

According to International Patent Classification (IPC) or to both national classification and IPC

B. FIELDS SEARCHED

Minimum documentation searched (classification system followed by classification symbols)
G02F1/133, G09G3/20, G09G3/34, G09G3/36, H04N5/57, H04N5/66

Documentation searched other than minimum documentation to the extent that such documents are included in the fields searched
Jitsuyo Shinan Koho        1922-1996   Jitsuyo Shinan Toroku Koho   1996-2006
Kokai Jitsuyo Shinan Koho  1971-2006   Toroku Jitsuyo Shinan Koho   1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2003-280617 A  (Matsushita Electric Industrial Co., Ltd.), 02 October, 2003 (02.10.03), Full text; all drawings & WO 2003/063121 A1    & US 2004/0141094 A1 & EP 1471489 A1 | 1-12 |
| Y | JP 2003-36063 A  (Matsushita Electric Industrial Co., Ltd.), 07 February, 2003 (07.02.03), Full text; all drawings & WO 2002/089106 A1    & US 2003/0146919 A1 & EP 1383104 A1 | 1-12 |

|☒| Further documents are listed in the continuation of Box C. |☐| See patent family annex. |

\* Special categories of cited documents:
"A" document defining the general state of the art which is not considered   to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 02 May, 2006 (02.05.06) | 16 May, 2006 (16.05.06) |

| Name and mailing address of the ISA/ Japanese Patent Office | Authorized officer |
|---|---|
| Facsimile No. | Telephone No. |

Form PCT/ISA/210 (second sheet) (April 2005)

**INTERNATIONAL SEARCH REPORT**

| International application No. |
| --- |
| PCT/JP2006/304059 |

C (Continuation).  DOCUMENTS CONSIDERED TO BE RELEVANT

| Category* | Citation of document, with indication, where appropriate, of the relevant passages | Relevant to claim No. |
| --- | --- | --- |
| Y | JP 2004-354882 A  (Seiko Epson Corp.),<br>16 December, 2004 (16.12.04),<br>Full text; all drawings<br>& US 2005/0017990 A1    & EP 1489853 A2 | 1-12 |
| Y | JP 2004-32000 A  (Matsushita Electric Industrial Co., Ltd.),<br>29 January, 2004 (29.01.04),<br>Par. No. [0012]; Fig. 2<br>(Family: none) | 6 |
| P,A | JP 2005-148596 A  (Sanyo Electric Co., Ltd.),<br>09 June, 2005 (09.06.05),<br>Full text; all drawings<br>(Family: none) | 1-13 |
| P,A | JP 2005-94072 A  (Sony Corp.),<br>07 April, 2005 (07.04.05),<br>Par. No. [0073]<br>(Family: none) | 13 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H634946 A
- JP S6219835 A
- JP 2002014660 A
- JP 2001111916 A
- JP H10322622 A
- JP 2002158941 A
- JP 2005012285 A
- WO 2004088616 A